# EUROPEAN PATENT APPLICATION

(11) **EP 4 600 531 A1**
(43) Date of publication of application: **13.08.2025**
(21) Application number: 23874867.7
(22) Date of filing: 03.10.2023
(51) Int. Cl.: F16J 15/34, F04C 18/02, F04C 29/00

(54) **SEAL RING**

(30) Priority: 04.10.2022 JP 2022160538
(71) Applicant: NOK Corporation, Minato-ku Tokyo 105-8585 (JP); Eagle Industry Co., Ltd., Minato-ku Tokyo 105-8587 (JP)
(72) Inventor: YOSHIDA, Yusuke, Kitaibaraki-shi, Ibaraki 319-1535 (JP); SEKI, Masatoshi, Kitaibaraki-shi, Ibaraki 319-1535 (JP); TOKUNAGA, Yuichiro, Tokyo 105-8587 (JP); SUZUKI, Hiroshi, Tokyo 105-8587 (JP)
(74) Representative: Global IP Europe Patentanwaltskanzlei
(86) International application number: PCT/JP2023/036090
(87) International publication number: WO 2024/075740

(57) **Abstract**

A seal ring (1) is in an annular shape around an axis (x) and the seal ring has: a one-side surface (1a) that is an annular surface facing one side in a direction of the axis (x); and an opposite-side surface (1b) that is an annular surface facing an opposite side in the direction of the axis (x). When being in contact with one or the other one of a movable scroll and a thrust plate of an installation object, at least one of the one-side surface (1a) and the opposite-side surface (1b) is configured to form a gap (1c) between the one or the other one of the two members and the at least one of the one-side surface and the opposite-side surface. The gap (1c) is configured to gradually decrease with wear of the at least one of the one-side surface (1a) and the opposite-side surface (1b) due to the contact with the movable scroll and the thrust plate.

## Description

### [Technical Field]

The present invention relates to a seal ring.

### [Background Art]

An annular seal ring has been used to close a gap between a fixed member and a movable member facing the fixed member and configured to relatively move with respect to the fixed member. For example, in a scroll compressor used in an air-conditioning system for an automobile, a seal ring is provided between a movable scroll and a thrust plate supporting the movable scroll in order to seal a low-pressure chamber, which is in communication with a compression chamber formed by the movable scroll and a fixed scroll, to prevent the leakage of a coolant (see, for example, Patent Literature 1). The seal ring slides with respect to the movable scroll or the thrust plate while being in contact with the movable scroll or the thrust plate in a direction of an axis of the seal ring.

### [Citation List]

### [Patent Literature]

Patent Literature 1: Japanese Patent Application Publication No. 8-159051

### [Summary of the Invention]

### [Technical Problem]

In a scroll compressor, a movable scroll is configured to eccentrically rotate. Thus, a seal ring also eccentrically rotates along with the movable scroll or relatively eccentrically rotates with respect to the movable scroll. As seen from the above, in a conventional scroll compressor, the seal ring slides with respect to the thrust plate or the movable scroll on the basis of the eccentric rotation of the movable scroll, thus becoming a resistance (a sliding resistance) to a rotary driving force that causes the movable scroll to eccentrically rotate.

Meanwhile, in order to reduce a decrease in efficiency of the scroll compressor, a decrease in the rotary driving force (lowering of torque) that causes the movable scroll to eccentrically rotate has been demanded. Accordingly, in order to lower a torque in the scroll compressor, a decrease in sliding resistance of the seal ring is also demanded. As seen from the above, for the seal ring of the conventional scroll compressor, a configuration enabling a decrease in sliding resistance is demanded.

Moreover, a contact portion of the seal ring wears with use. The contact portion of the seal ring is thus deformed due to use. There are cases where the deformation leads to an increase in sliding resistance. Accordingly, for the seal ring of the conventional scroll compressor, there is a demand for a configuration in which the sliding resistance is not increased even though the contact portion of the seal ring is deformed over time. As seen from the above, for the seal ring of the conventional scroll compressor, there is a demand for a configuration in which the sliding resistance is not increased over time.

An object of the present invention is to provide a seal ring enabling a reduction in an increase over time in sliding resistance.

### [Solution to Problem]

In order to achieve the above-described object, a seal ring according to the present invention is a seal ring for closing a gap between two members configured to relatively move with respect to each other, the seal ring is in an annular shape around an axis, and the seal ring has: a one-side surface that is an annular surface facing one side in a direction of the axis; and an opposite-side surface that is an annular surface facing an opposite side in the direction of the axis, in which when being in contact with one or the other one of the two members, at least one of the one-side surface and the opposite-side surface is configured to form a gap between the one or the other one of the two members and the at least one of the one-side surface and the opposite-side surface, and the gap is configured to gradually decrease with wear of the at least one of the one-side surface and the opposite-side surface due to the contact with the one of the two members.

**In** the seal ring according to an aspect of the present invention, the at least one of the one-side surface and the opposite-side surface includes a plurality of portions projecting toward the side faced by the at least one of the one-side surface and the opposite-side surface.

In the seal ring according to an aspect of the present invention, the plurality of projecting portions are provided at a distance around the axis.

In the seal ring according to an aspect of the present invention, when being in contact with the one of the two members, the one-side surface is configured to form the gap between the one of the two members and the one-side surface, and when being in contact with the other one of the two members, the opposite-side surface is configured to form the gap between the other one of the two members and the opposite-side surface.

In the seal ring according to an aspect of the present invention, the one-side surface includes: a plurality of one-side inner peripheral recessed portions that are recessed portions formed with a space in between in a circumferential direction and opening on an inner peripheral side; and a plurality of one-side outer peripheral recessed portions that are recessed portions formed with a space in between in the circumferential direction and opening on an outer peripheral side, the one-side inner peripheral recessed portions each have a bottom surface that is a surface increased in diameter as approaching the one side in the direction of the axis, and the one-side outer peripheral recessed portions each have a bottom surface that is a surface decreased in diameter as approaching the one side in the direction of the axis.

In the seal ring according to an aspect of the present invention, the bottom surface of each of the one-side inner peripheral recessed portions is continuously increased in diameter as approaching the one side in the direction of the axis.

In the seal ring according to an aspect of the present invention, the bottom surface of each of the one-side outer peripheral recessed portions is continuously decreased in diameter as approaching the one side in the direction of the axis.

In the seal ring according to an aspect of the present invention, the bottom surface of each of the one-side inner peripheral recessed portions is intermittently increased in diameter as approaching the one side in the direction of the axis.

In the seal ring according to an aspect of the present invention, the bottom surface of each of the one-side outer peripheral recessed portions is intermittently decreased in diameter as approaching the one side in the direction of the axis.

In the seal ring according to an aspect of the present invention, the one-side inner peripheral recessed portions and the respective one-side outer peripheral recessed portions face away from each other in a radial direction.

In the seal ring according to an aspect of the present invention, the opposite-side surface includes: a plurality of opposite-side inner peripheral recessed portions that are recessed portions formed with a space in between in the circumferential direction and opening on the inner peripheral side; and a plurality of opposite-side outer peripheral recessed portions that are recessed portions formed with a space in between in the circumferential direction and opening on the outer peripheral side, the opposite-side inner peripheral recessed portions each have a bottom surface that is a surface increased in diameter as approaching the opposite side in the direction of the axis, and the opposite-side outer peripheral recessed portions each have a bottom surface that is a surface decreased in diameter as approaching the opposite side in the direction of the axis.

In the seal ring according to an aspect of the present invention, the bottom surface of each of the opposite-side inner peripheral recessed portions is continuously increased in diameter as approaching the opposite side in the direction of the axis.

In the seal ring according to an aspect of the present invention, the bottom surface of each of the opposite-side outer peripheral recessed portions is continuously decreased in diameter as approaching the opposite side in the direction of the axis.

In the seal ring according to an aspect of the present invention, the bottom surface of each of the opposite-side inner peripheral recessed portions is intermittently increased in diameter as approaching the opposite side in the direction of the axis.

In the seal ring according to an aspect of the present invention, the bottom surface of each of the opposite-side outer peripheral recessed portions is intermittently decreased in diameter as approaching the opposite side in the direction of the axis.

In the seal ring according to an aspect of the present invention, the opposite-side inner peripheral recessed portions and the respective opposite-side outer peripheral recessed portions face away from each other in a radial direction.

### [Advantageous Effects of the Invention]

A seal ring according to the present invention enables a reduction in an increase over time in the sliding resistance.

### [Brief Description of the Drawings]

[Fig. 1] Fig. 1 is a front view of a seal ring according to a first embodiment of the present invention.
[Fig. 2] Fig. 2 is a side view of the seal ring illustrated in Fig. 1.
[Fig. 3] Fig. 3 is a cross-sectional perspective view illustrating a portion of the seal ring illustrated in Fig. 1.
[Fig. 4] Fig. 4 is a cross sectional view of the seal ring in a cross section along a line A-A in Fig. 1.
[Fig. 5] Fig. 5 is a cross sectional view of a scroll compressor, illustrating the seal ring illustrated in Fig. 1 in a use state of being attached to the scroll compressor, which is an installation object.
[Fig. 6] Fig. 6 is a diagram schematically illustrating a relative motion of the seal ring relative to a thrust plate during an eccentric rotation of an eccentric portion of the scroll compressor illustrated in Fig. 5.
[Fig. 7] Fig. 7 is a side view of a seal ring according to a second embodiment of the present invention.
[Fig. 8] Fig. 8 is a cross-sectional perspective view illustrating a portion of the seal ring illustrated in Fig. 7.
[Fig. 9] Fig. 9 is a cross sectional view of the seal ring in a cross section along a line B-B in Fig. 8.
[Fig. 10] Fig. 10 is a plan view of a seal ring according to a third embodiment of the present invention.
[Fig. 11] Fig. 11 is a cross-sectional perspective view illustrating a portion of the seal ring illustrated in Fig. 10.
[Fig. 12] Fig. 12 is a cross sectional view of the seal ring in a cross section along a line C-C in Fig. 10.
[Fig. 13] Fig. 13 is a cross-sectional perspective view illustrating a portion of the seal ring according to the third embodiment of the present invention.
[Fig. 14] Fig. 14 is a cross sectional view of the seal ring in a cross section along a line D-D in Fig. 13.

### [Description of Embodiments]

Description will be made below on embodiments of the present invention with reference to the drawings.

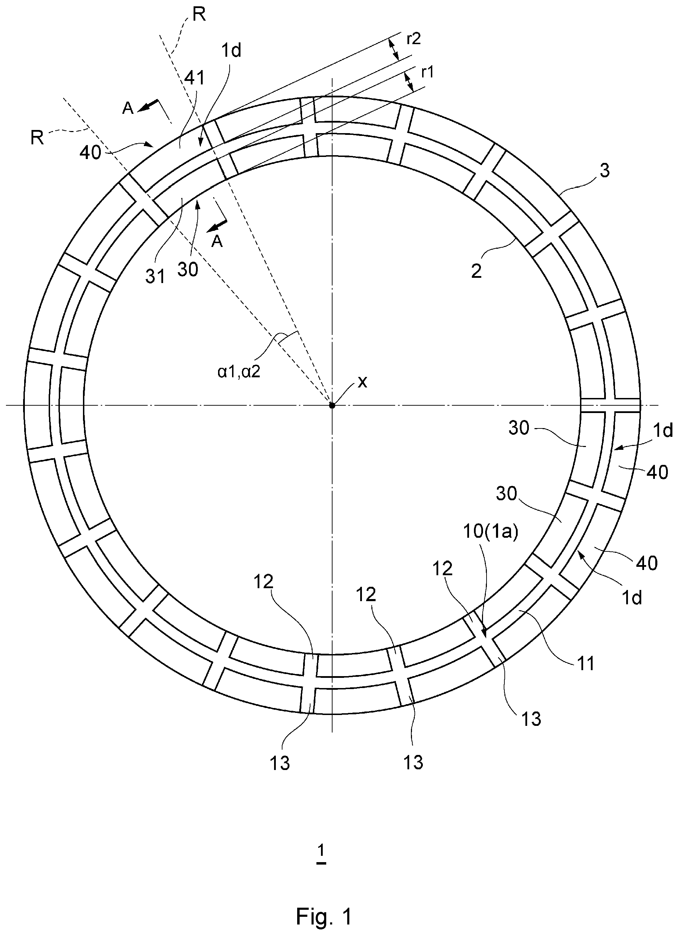

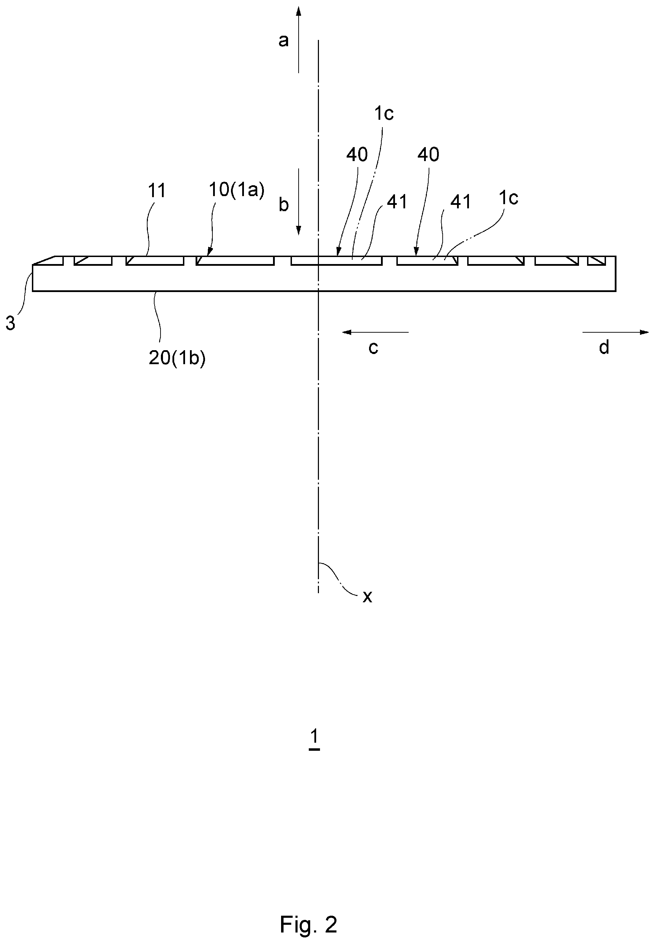

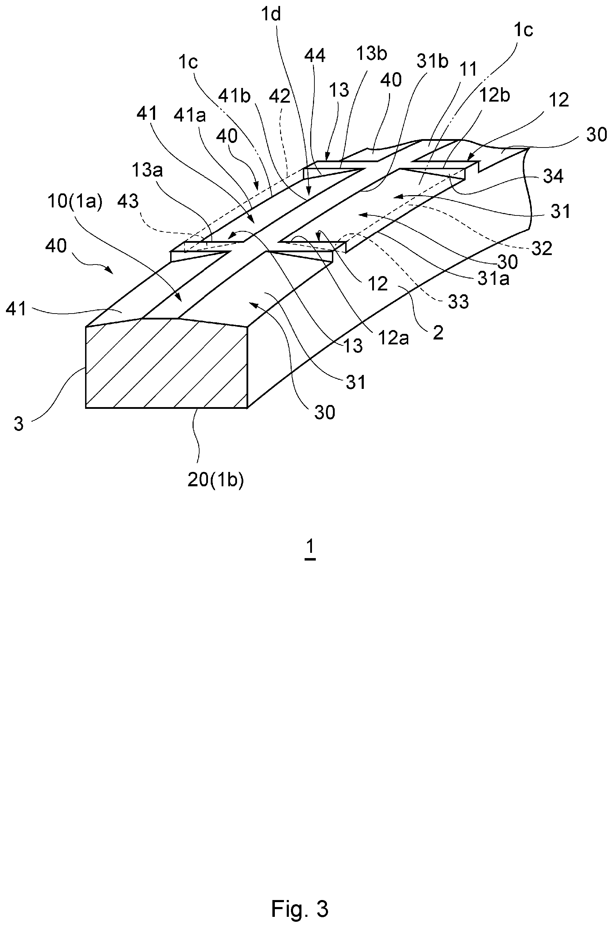

Fig. 1 is a plan view of a seal ring 1 according to a first embodiment of the present invention, Fig. 2 is a side view of the seal ring 1, and Fig. 3 is a cross-sectional perspective view illustrating a portion of the seal ring 1. The seal ring according to the present invention is a seal ring for closing a gap between two members configured to relatively move with respect to each other. For example, the seal ring according to the present invention is used between the two members configured to relatively move with respect to each other in order to close a gap between facing surfaces configured to relatively move with respect to each other. The seal ring according to the present invention is provided in, for example, a scroll compressor used in an air-conditioning system for an automobile, or the like between a movable scroll and a thrust plate supporting the movable scroll in order to seal a low-pressure chamber, which is in communication with a compression chamber formed by the movable scroll and a fixed scroll, to prevent the leakage of a coolant. The seal ring 1 according to the embodiment of the present invention is configured to be used for a scroll compressor. It should be noted that an object (an installation object) in which the seal ring 1 according to the embodiment of the present invention is to be installed is not limited to the above.

The seal ring 1 is in an annular shape around an axis x and has a one-side surface 1a that is an annular surface facing one side in an axis-x direction and an opposite-side surface 1b that is an annular surface facing an opposite side in the axis-x direction. When being in contact with one or the other one of a movable scroll and a thrust plate of the installation object, at least one of the one-side surface 1a and the opposite-side surface 1b is configured to form a gap 1c between the one or the other one of these two members and the at least one of the one-side surface 1a and the opposite-side surface 1b. The gap 1c is configured to gradually decrease with wear of the at least one of the one-side surface 1a and the opposite-side surface 1b due to the contact with one of the movable scroll and the thrust plate. A configuration of the seal ring 1 will be specifically described below.

The at least one of the one-side surface 1a and the opposite-side surface 1b includes a plurality of projecting portions 1d, which are portions projecting toward the side faced by the at least one of the one-side surface 1a and the opposite-side surface 1b. When the one-side surface 1a or the opposite-side surface 1b is in contact with the movable scroll or the thrust plate of the installation object, the plurality of projecting portions 1d cause the gap 1c to be formed between the one-side surface 1a or the opposite-side surface 1b and the movable scroll or the thrust plate. The plurality of projecting portions 1d are provided, for example, at a distance around the axis x. Specifically, for example, when being in contact with one of the movable scroll and the thrust plate, the one-side surface 1a forms the gap c between the one-side surface 1a and the one of the movable scroll and the thrust plate. Moreover, specifically, for example, when being in contact with the other one of the movable scroll and the thrust plate, the opposite-side surface 1b forms the gap c between the opposite-side surface 1b and the other one of the movable scroll and the thrust plate. It should be noted that when being in contact with one of the movable scroll and the thrust plate, only the one-side surface 1a forms the gap 1c between the one-side surface 1a and one of the movable scroll and the thrust plate. Moreover, when being in contact with one of the movable scroll and the thrust plate, only the opposite-side surface 1b forms the gap 1c between the opposite-side surface 1b and the one of the movable scroll and the thrust plate.

Specifically, for example, the seal ring 1 has a sliding surface 10, which is the one-side surface 1a, and a fixed surface 20, which is the opposite-side surface 1b. The sliding surface 10 includes a plurality of inner recessed portions 30, which are one-side inner peripheral recessed portions that are recessed portions formed with a space in between in a circumferential direction and opening on an inner peripheral side, and a plurality of outer recessed portions 40, which are one-side outer peripheral recessed portions that are recessed portions formed with a space in between in the circumferential direction and opening on an outer peripheral side. The inner recessed portions 30 each have a bottom surface 31 that is a surface increased in diameter as approaching the one side in the axis-x direction. The outer recessed portions 40 each have a bottom surface 41 that is a surface decreased in diameter as approaching the one side in the axis-x direction.

Hereinbelow, a side in the axis-x direction facing a direction indicated by an arrow a (see Fig. 2) is referred to as upper side (the one side) and a side in the axis-x direction facing a direction indicated by an arrow b (see Fig. 2) is referred to as lower side (the opposite side) for the purpose of convenience. It should be noted that the inner peripheral side is a side in a direction (hereinafter, also referred to as "radial direction") perpendicular to the axis x and facing a direction (an arrow-c direction in Fig. 2) toward the axis x and the outer peripheral side is a side in the radial direction and facing a direction (an arrow-d direction in Fig. 2) away from the axis x. As seen from the above, the upper side and the lower side are to be used for the convenience of explanation and do not specify an attachment attitude of the seal ring 1, or the like. Moreover, in the drawings, pluralities of members, such as the inner recessed portions 30 and the outer recessed portions 40, are only partly labelled with the reference signs.

The seal ring 1 is made of a resin material. Specifically, for example, the seal ring 1 is in a rectangular or substantially rectangular shape in a cross section perpendicular to an extending direction of the seal ring 1 and has an inner peripheral surface 2, which is an annular surface facing the inner peripheral side, and an outer peripheral surface 3, which is an annular surface formed facing away from the inner peripheral surface 2 and facing the outer peripheral side, as illustrated in Figs. 1 to 3. The inner peripheral surface 2 extends between an edge on the inner peripheral side of the sliding surface 10 and an edge on the inner peripheral side of the fixed surface 20 and the outer peripheral surface 3 extends between an edge on the outer peripheral side of the sliding surface 10 and an edge on the outer peripheral side of the fixed surface 20. Examples of the resin material of the seal ring 1 include polyether ether ketone (PEEK).

The sliding surface 10 is a surface formed as a sliding surface that is pressed against a thrust plate and slides on the thrust plate in a use state where the seal ring 1 is attached to a later-described scroll compressor, which is an installation object of the seal ring 1. The sliding surface 10 is an annular surface stretching on or substantially on a plane perpendicular or substantially perpendicular to the axis x and extends along or substantially along a circle centered about or substantially about the axis x as illustrated in, for example, Figs. 1 to 3.

As described above, the plurality of inner recessed portions 30 and the plurality of outer recessed portions 40 are formed in the sliding surface 10. The sliding surface 10 is recessed downward at respective portions corresponding to the inner recessed portions 30 and the outer recessed portions 40 and the plurality of inner recessed portions 30 and the plurality of outer recessed portions 40 form the plurality of projecting portions 1d. The inner recessed portions 30 are arranged side by side at a distance in the circumferential direction, for example, at or substantially at an equiangular distance around the axis x. The outer recessed portions 40 are arranged side by side at a distance in the circumferential direction, for example, at or substantially at an equiangular distance around the axis x. Moreover, for example, the inner recessed portions 30 and the respective outer recessed portions 40 are provided to face away from each other in the radial direction.

As described above, the plurality of inner recessed portions 30 and the plurality of outer recessed portions 40 are formed in the seal ring 1 and the sliding surface 10 has an annular planar portion 11, a plurality of inner-rib planar portions 12, and a plurality of outer-rib planar portions 13 as illustrated in Fig. 1. The annular planar portion 11 is a portion of the sliding surface 10 in the form of an annular planar portion, the inner-rib planar portions 12 are portions of the sliding surface 10 in the form of planar portions extending toward the inner peripheral side from the annular planar portion 11, and the outer-rib planar portions 13 are portions of the sliding surface 10 in the form of planar portions extending toward the outer peripheral side from the annular planar portion 11. It should be noted that in the drawings, the plurality of inner-rib planar portions 12 and the plurality of outer-rib planar portions 13 are only partly labelled with the reference signs.

The fixed surface 20 is a surface configured to be supported by the movable scroll and fixed to the movable scroll in the later-described use state of the seal ring 1. The fixed surface 20 is an annular surface stretching on or substantially on a plane perpendicular or substantially perpendicular to the axis x and also a surface in or substantially in a circular shape centered about or substantially about the axis x as illustrated in, for example, Figs. 1 to 3.

The inner peripheral surface 2 is a cylindrical or substantially cylindrical surface centered about or substantially about the axis x as illustrated in, for example, Figs. 1 and 2 and the outer peripheral surface 3 is a cylindrical or substantially cylindrical surface centered about or substantially about the axis x as illustrated in, for example, Figs. 1 and 2.

As illustrated in Fig. 1, the inner recessed portions 30 each extend in the circumferential direction along an arc as viewed in the axis-x direction and, for example, extend in the circumferential direction along or substantially along a circular arc. In the illustrated example, the inner recessed portions 30 each extend, across a range with a central angle α1 (a range between dotted lines R) centered about the axis x, in the circumferential direction in a circular arc along a circular arc with the center axis α1 as viewed in the axis-x direction. A width (a width r1) in the radial direction of each of the inner recessed portions 30 is, for example, constant or substantially constant in the extending direction of that inner recessed portion 30 (the circumferential direction).

As illustrated in Fig. 1, the outer recessed portions 40 each extend in the circumferential direction along an arc as viewed in the axis-x direction and, for example, extend in the circumferential direction along or substantially along a circular arc. For example, the outer recessed portions 40 are on the outer peripheral side relative to the respective inner recessed portions 30 and similar or substantially similar in shape to the inner recessed portions 30 as viewed in the axis-x direction. In the illustrated example, the outer recessed portions 40 each extend, across a range with a central angle α2 (= α1) centered about the axis x (a range between the dotted lines R) and that is the same as the range where each of the inner recessed portions 30 extends, in the circumferential direction in a circular arc along a circular arc with the central angle α2 on the outer peripheral side relative to the respective inner recessed portions 30 as viewed in the axis-x direction as illustrated in Fig. 1. A width (a width r2) in the radial direction of each of the outer recessed portions 40 is, for example, constant or substantially constant in the extending direction of that outer recessed portion 40 (the circumferential direction). Moreover, the width r1 of each of the inner recessed portions 30 is, for example, the same or substantially the same as the width r2 of each of the outer recessed portions 40.

As described above, the inner recessed portions 30 and the outer recessed portions 40 face away from each other within the ranges with the central angles α1 and α2 (α1 = α2) centered about the axis x (the range between the dotted lines R). It should be noted that the inner recessed portions 30 and the outer recessed portions 40 are not necessarily provided to face away from each other. For example, the range with the central angle α1 (the range with the central angle α1 between the two radial direction lines (see the dotted lines R in Fig. 1)) where the inner recessed portions 30 extend and the range with the central angle α2 (the range with the central angle α2 between the two radial direction lines (see the dotted lines R in Fig. 1)) where the outer recessed portions 40 extend are not necessarily identical, may overlap, or may not overlap each other. Moreover, the width r1 of the inner recessed portions 30 and the width r2 of the outer recessed portions 40 are not necessarily the same. Moreover, the central angle α1 of the range where the inner recessed portions 30 extend and the central angle α2 of the range where the outer recessed portions 40 extend are not necessarily the same.

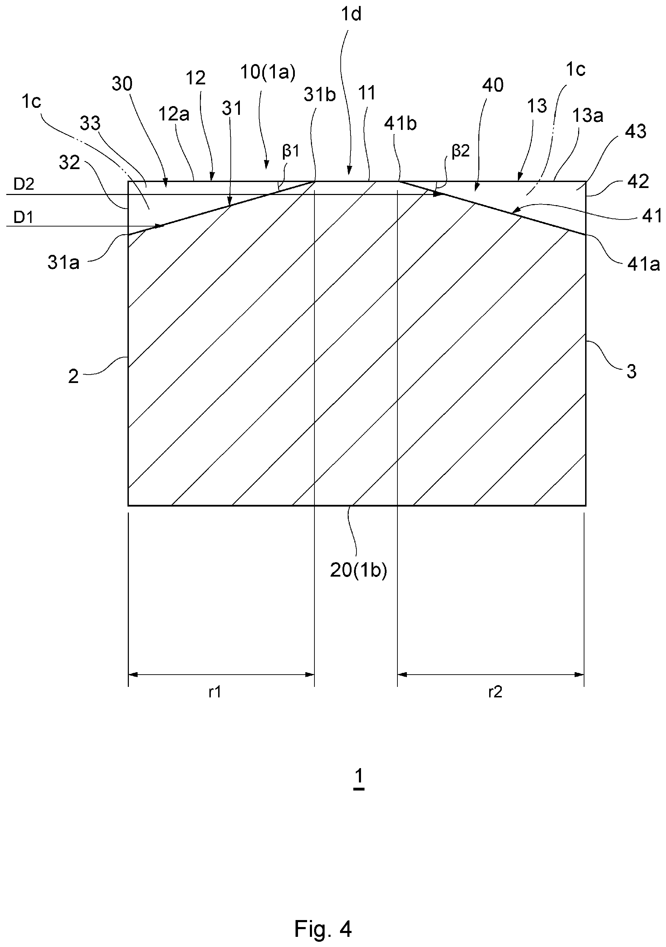

Fig. 4 is a cross-sectional view of the seal ring 1 in a cross section along a line A-A in Fig. 1. In other words, Fig. 4 is a cross-sectional view of the seal ring 1 in a cross section perpendicular to a circumferential extending direction of the seal ring 1. The bottom surface 31 of each of the inner recessed portions 30 stretches across the range with the central angle α1 (the range between the dotted lines R) as viewed in the axis-x direction as illustrated in Fig. 1. The bottom surface 31 of each of the inner recessed portions 30 is increased in diameter as approaching the upper side from the lower side in the axis-x direction and increased in distance (diameter D1) from the axis x as approaching the upper side in the axis-x direction as illustrated in Fig. 4. As illustrated in Figs. 3 and 4, the bottom surface 31 of each of the inner recessed portions 30 is, for example, continuously increased in diameter as approaching the upper side in the axis-x direction. Specifically, for example, the bottom surface 31 forms a linear or substantially linear outline inclined downward at an inclination angle β1 with respect to the annular planar portion 11 of the sliding surface 10 in the cross section perpendicular to the extending direction of the seal ring 1 as illustrated in Fig. 4. In other words, the bottom surface 31 of each of the inner recessed portions 30 is a flat or substantially flat surface inclined downward with respect to the annular planar portion 11 of the sliding surface 10 as illustrated in, for example, Figs. 3 and 4. The value of the inclination angle β1 of the bottom surface 31 is in a range of, for example, 0.3 degrees to 2 degrees.

As illustrated in Figs. 3 and 4, the bottom surface 31 of each of the inner recessed portions 30 is connected with the inner peripheral surface 2 at an edge on the inner peripheral side (an inner peripheral edge 31a) and the inner peripheral edge 31a of the bottom surface 31 of each of the inner recessed portions 30 is located below the inner-rib planar portions 12 of the sliding surface 10 in the axis-x direction. As seen from the above, the inner recessed portions 30 each form an opening portion 32 in the inner peripheral surface 2. The bottom surface 31 of each of the inner recessed portions 30 is also smoothly connected with the annular planar portion 11 of the sliding surface 10 at an edge on the outer peripheral side (an outer peripheral edge 31b) as illustrated in Figs. 3 and 4.

As illustrated in Figs. 3 and 4, the inner recessed portions 30 each also have side surfaces 33, 34, which are surfaces stretching below opposed two circumferential edges (edges 12a, 12b) of two of the inner-rib planar portions 12 opposed in the circumferential direction, respectively. In the illustrated example, the side surfaces 33, 34 are flat or substantially flat surfaces extending in parallel with or substantially in parallel with a plane including the axis x and also wedge-shaped or substantially wedge-shaped surfaces as illustrated in Fig. 1 and Figs. 3 and 4. Moreover, the side surface 33 and the side surface 34 are the same or substantially the same in shape and size. It should be noted that the side surfaces 33, 34 are not necessarily flat surfaces and may be, for example, curved surfaces or surfaces including a combination of a curved surface and a flat surface. Moreover, the shape of the side surfaces 33, 34 is not necessarily a wedge shape and may be another shape appropriate for the form of the bottom surface 31. Moreover, the side surfaces 33, 34 may be along a plane inclined with respect to the plane including the axis x.

It should be noted that the bottom surface 31 is not limited to the inclined flat surface as described above and may be, for example, a curved surface or a surface including a combination of a curved surface and a flat surface. Specifically, for example, the bottom surface 31 may be a surface forming an upwardly projecting arc, such as circular arc, in cross section or the bottom surface 31 may be a surface forming a downwardly projecting arc, such as circular arc, in cross section.

The bottom surface 41 of each of the outer recessed portions 40 stretches across the range with the central angle α2 (the range between the dotted lines R) as viewed in the axis-x direction as illustrated in Fig. 1. The bottom surface 41 of each of the outer recessed portions 40 is decreased in diameter as approaching the upper side from the lower side in the axis-x direction and decreased in distance from the axis x (diameter D2) as approaching the upper side in the axis-x direction as illustrated in Fig. 4. As illustrated in Figs. 3 and 4, the bottom surface 41 of each of the outer recessed portions 40 is, for example, continuously decreased in diameter as approaching the upper side in the axis-x direction. Specifically, for example, the bottom surface 41 forms a linear or substantially linear outline inclined downward at an inclination angle β2 with respect to the annular planar portion 11 of the sliding surface 10 in the cross section perpendicular to the extending direction of the seal ring 1 as illustrated in Fig. 4. In other words, the bottom surface 41 of each of the outer recessed portions 40 is a flat or substantially flat surface inclined downward with respect to the annular planar portion 11 of the sliding surface 10 as illustrated in, for example, Figs. 3 and 4. Moreover, for example, the inclination angle β1 of the bottom surface 31 of each of the inner recessed portions 30 and the inclination angle β2 of the bottom surface 41 of each of the outer recessed portions 40 are the same or substantially the same. The value of the inclination angle β2 of the bottom surface 41 is in a range of, for example, 0.3 degrees to 2 degrees. The inclination angle β1 of the bottom surface 31 of each of the inner recessed portions 30 and the inclination angle β2 of the bottom surface 41 of each of the outer recessed portions 40 may be different.

As illustrated in Figs. 3 and 4, the bottom surface 41 of each of the outer recessed portions 40 is connected with the outer peripheral surface 3 at an edge on the outer peripheral side (an outer peripheral edge 41a) and the outer peripheral edge 41a of the bottom surface 41 of each of the outer recessed portions 40 is located below the outer-rib planar portions 13 of the sliding surface 10 in the axis-x direction. As seen from the above, the outer recessed portions 40 each form an opening portion 42 in the outer peripheral surface 3. The bottom surface 41 of each of the outer recessed portions 40 is also smoothly connected with the annular planar portion 11 of the sliding surface 10 at an edge on the inner peripheral side (an inner peripheral edge 41b) as illustrated in Figs. 3 and 4.

As illustrated in Figs. 3 and 4, the outer recessed portions 40 each also have side surfaces 43, 44, which are surfaces stretching below opposed two circumferential edges (edges 13a, 13b) of opposed two of the outer-rib surfaces 13, respectively. In the illustrated example, the side surfaces 43, 44 are flat or substantially flat surfaces extending in parallel with or substantially in parallel with a plane including the axis x and also wedge-shaped or substantially wedge-shaped surfaces as illustrated in Figs. 3 and 4. Moreover, the side surface 43 and the side surface 44 are the same or substantially the same in shape and size. It should be noted that the side surfaces 43, 44 are not necessarily flat surfaces and may be, for example, curved surfaces or surfaces including a combination of a curved surface and a flat surface. Moreover, the shape of the side surfaces 43, 44 is not necessarily a wedge shape and may be another shape appropriate for the form of the bottom surface 41. Moreover, the side surfaces 43, 44 may be along a plane inclined with respect to the plane including the axis x.

It should be noted that the bottom surface 41 is not limited to the inclined flat surface as described above and may be, for example, a curved surface or a surface including a combination of a curved surface and a flat surface. Specifically, for example, the bottom surface 41 may be a surface forming an upwardly projecting arc, such as circular arc, in cross section or the bottom surface 41 may be a surface forming a downwardly projecting arc, such as circular arc, in cross section.

As seen from the above, each of the inner recessed portions 30 forms a recessed portion on the inner peripheral side of the sliding surface 10 and the recessed portion gradually decreases in area in a cross section perpendicular to the radial direction or area in a cross section defined by a cylindrical plane centered about the axis x from the opening portion 32 on the inner peripheral side toward the outer peripheral edge 31b on the outer peripheral side. In contrast, each of the outer recessed portions 40 forms a recessed portion on the outer peripheral side of the sliding surface 10 and the recessed portion gradually decreases in area in a cross section perpendicular to the radial direction or area in a cross section defined by a cylindrical plane centered about the axis x from the opening portion 42 on the outer peripheral side toward the inner peripheral edge 41b on the inner side.

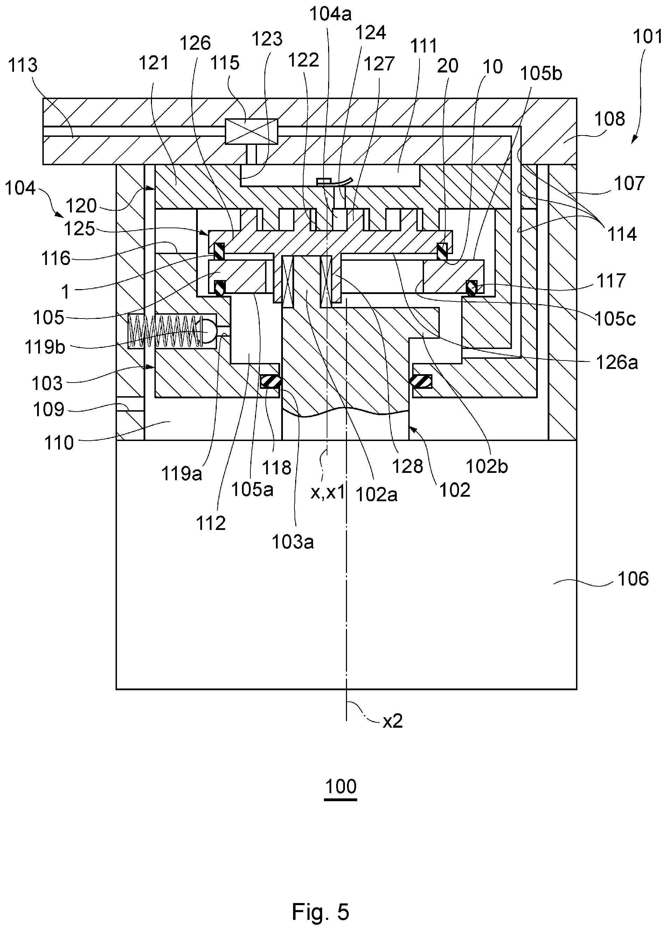

Next, description will be made on workings of the seal ring 1 having the above-described configuration. Fig. 5 is a cross sectional view of a scroll compressor 100, illustrating the seal ring 1 in a use state of being attached to the scroll compressor 100, which is an installation object. The scroll compressor 100 is used, for example, in an air-conditioning system for an automobile to suck, compress, and discharge a coolant. The coolant is, for example, a gas, which is mixed with a lubricant in the form of mist.

The scroll compressor 100 includes a housing 101, a rotary shaft 102, an inner casing 103, a scroll compression mechanism 104, a thrust plate 105, and a drive motor 106 as illustrated in Fig. 5. The housing 101 includes a tubular casing 107 and a cover 108 closing an upper opening of the casing 107. A low-pressure chamber 110 to which a low-pressure coolant is to be supplied through a suction opening 109 from a non-illustrated coolant circuit, a high-pressure chamber 111 from which a high-pressure coolant compressed by the scroll compression mechanism 104 is to be discharged, and a back-pressure chamber 112 to which the coolant compressed by the scroll compression mechanism 104 is to be partly supplied along with a lubricant are formed in the casing 107. The back-pressure chamber 112 is formed in the cylindrical inner casing 103 housed in the casing 107. A discharge communication path 113, through which the non-illustrated coolant circuit is in communication with the high-pressure chamber 111, is formed in the cover 108. Moreover, a portion of a back-pressure communication path 114, through which the high-pressure chamber 111 is in communication with the back-pressure chamber 112, is bifurcated from the discharge communication path 113 to be formed in the cover 18. It should be noted that the discharge communication path 113 is provided with an oil separator 115 configured to separate the lubricant from the coolant.

The inner casing 103 is fixed with an end thereof on the upper side being in contact with an endplate 121 of a fixed scroll 120 forming the scroll compression mechanism 104. Moreover, a suction communication path 116 penetrating in the radial direction is formed in an end portion on the upper side of the inner casing 103. The low-pressure chamber 110 is thus formed from the outside of the inner casing 103 to the inside of the inner casing 103 through the suction communication path 116. The coolant supplied to the inside of the inner casing 103 through the suction communication path 116 is to be sucked by the scroll compression mechanism 104.

The scroll compression mechanism 104 includes the fixed scroll 120 fixed with respect to the cover 108 and a movable scroll 125 housed in the inner casing 103. The fixed scroll 120 is made of metal and includes a spiral wrap 122 projecting from a surface on the lower side of the disc-shaped endplate 121. The fixed scroll 120 is also formed with a recessed portion 123, which is recessed downward, in a surface on the upper side of the endplate 121 and the recessed portion 123 and a surface on the lower side of the cover 108 define the high-pressure chamber 111.

The movable scroll 125 is made of metal and includes a spiral wrap 127 projecting from a surface on the upper side of a disc-shaped endplate 126. The movable scroll 125 is also formed with a boss 128 projecting at a position distant from a center of a surface on the lower side (a lower surface 126a) of the endplate 126. An eccentric portion 102a, which is formed at an end portion on the upper side of the rotary shaft 102, is relatively rotatably housed in the boss 128. It should be noted that in the illustrated example, the eccentric portion 102a of the rotary shaft 102 and a counter weight unit 102b projecting in an outer peripheral direction from the end portion on the upper side of the rotary shaft 102 form an eccentric mechanism configured to cause the rotary shaft 102 to eccentrically rotate.

The seal ring 1 is fixed to the lower surface 126a of the endplate 126 of the movable scroll 125. Specifically, a portion on the fixed surface 20 side of the seal ring 1 is fixed to the lower surface 126a of the endplate 126 of the movable scroll 125 in a manner such that the sliding surface 10 of the seal ring 1 faces downward and is located below the lower surface 126a of the movable scroll 125.

The thrust plate 105 is a circular metal member. A conventionally known seal ring 117 is fixed to a surface on the lower side (a lower surface 105a) of the thrust plate 105. The thrust plate 105 is provided below the movable scroll 125. Specifically, the seal ring 117 is in contact with an inner peripheral surface of the inner casing 103 and the thrust plate 105 is fixed to the inner casing 103 with the seal ring 117 in between. Moreover, the sliding surface 10 of the seal ring 1 is in contact with a surface on the upper side (an upper surface 105b) of the thrust plate 105. As seen from the above, the thrust plate 105 functions as a thrust bearing configured to receive a thrust load of the movable scroll 125 in an axis-x1 direction through the seal ring 1. It should be noted that the axis x1 is an axis of the movable scroll 125 and the axis x1 of the movable scroll 125 is identical or substantially identical to the axis x of the seal ring 1.

The thrust plate 105 is formed with a through hole 105c and the boss 128 of the movable scroll 125 is inserted in the through hole 105c. The through hole 105c is formed in a diameter size allowing for an eccentric rotation of the boss 128 caused by the eccentric portion 102a of the rotary shaft 102 fitted in the boss 128 by insertion. The eccentric rotation of the eccentric portion 102a of the rotary shaft 102 thus causes the movable scroll 125 to eccentrically rotate with respect to an axis x2 of the rotary shaft 102, so that the sliding surface 10 of the seal ring 1 relatively slides with respect to the upper surface 105b of the thrust plate 105 while eccentrically rotating.

The seal ring 1 and the seal ring 117 define, inside the inner casing 103, the low-pressure chamber 110, which is formed on the outer peripheral side of the movable scroll 125, and the back-pressure chamber 112, which is formed below the movable scroll 125. The back-pressure chamber 112 is formed as a sealed space by a conventionally known seal ring 118 closing an annular space between a through hole 103a, which is formed in the inner casing 103 and through which the rotary shaft 102 penetrates, and the rotary shaft 102. Moreover, the back-pressure communication path 114, which is formed through the cover 108, the fixed scroll 120, and the inner casing 103 to bring the high-pressure chamber 111 and the back-pressure chamber 112 into communication with each other, is provided with a non-illustrated orifice so that the coolant of the high-pressure chamber 111 decreased in pressure through the orifice is supplied to the back-pressure chamber 112 along with the lubricant separated by the oil separator 115. A pressure inside the back-pressure chamber 112 is regulated so as to be higher than a pressure inside the low-pressure chamber 110. It should be noted that the inner casing 103 is formed with a depressurizing hole 119a penetrating in the radial direction to bring the low-pressure chamber 110 and the back-pressure chamber 112 into communication with each other and a pressure regulation valve 119b is provided in the depressurizing hole 119a. The pressure regulation valve 119b is configured to be opened as the pressure inside the back-pressure chamber 112 exceeds a set value.

In the scroll compression mechanism 104, a compression chamber 104a is formed between the wrap 122 of the fixed scroll 120 and the wrap 127 of the movable scroll 125 and the compression chamber 104a is in communication with the high-pressure chamber 111 through a discharge hole 124, which is a hole penetrating the endplate 121 of the fixed scroll 120.

In the scroll compressor 100, the rotary shaft 102 is driven to rotate by the drive motor 106, which causes the eccentric portion 102a to eccentrically rotate, so that the movable scroll 125 relatively moves with respect to the fixed scroll 120 while eccentrically rotating. With the eccentric rotation of the movable scroll 125, a contact position in the radial direction between the wraps 122, 127 sequentially moves in a direction of rotation with the compression chamber 104a, which is formed between the wraps 122, 127, gradually downsized with a movement toward a middle. This causes the coolant sucked into the compression chamber 104a of the scroll compression mechanism 104 from the low-pressure chamber 110 to be compressed, so that a high-pressure coolant is discharged into the high-pressure chamber 111 through the discharge hole 124 of the fixed scroll 120.

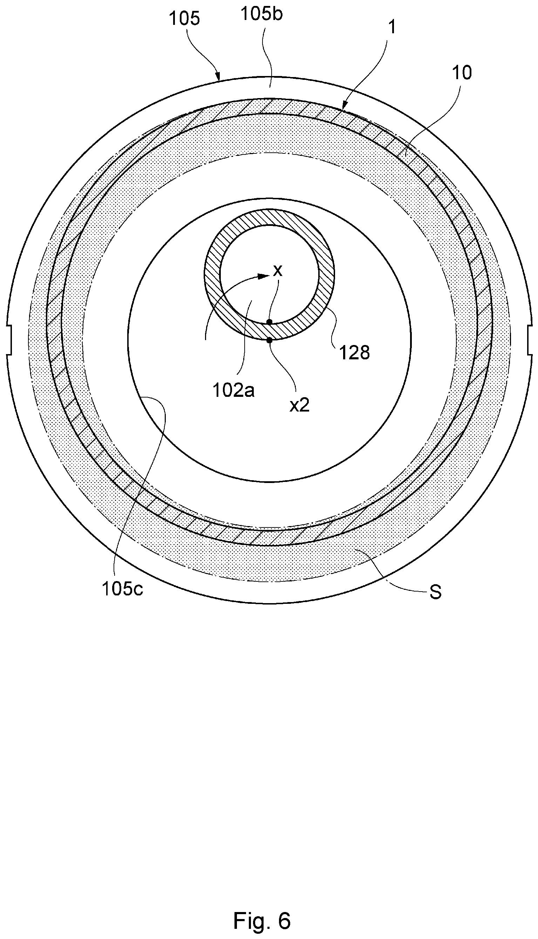

In the scroll compressor 100, as the drive motor 106 is driven, the eccentric portion 102a eccentrically rotates around the axis x2 of the rotary shaft 102 with the rotation of the rotary shaft 102, causing the movable scroll 125 to eccentrically rotate with the seal ring 1 as described above. At this time, the center axis x of the seal ring 1 rotates around the axis x2 of the rotary shaft 102 in a circle. The eccentric rotation of the movable scroll 125 causes the sliding surface 10 of the seal ring 1 to slide in a circle on the upper surface 105b of the thrust plate 105. Fig. 6 is a diagram schematically illustrating a relative motion of the seal ring 1 relative to the thrust plate 105 during the eccentric rotation of the eccentric portion 102a. A circular region (a sliding region S), which is dotted in Fig. 6, centered about the axis x2 of the rotary shaft 102 is a region for the sliding surface 10 of the seal ring 1 to slide on the upper surface 105b of the thrust plate 105 during the eccentric rotation of the eccentric portion 102a.

The seal ring 1 has the plurality of inner recessed portions 30 in the sliding surface 10 and thus the plurality of gaps 1c are formed between the upper surface 105b of the thrust plate 105 and the sliding surface 10. Moreover, the pressure of the coolant (the fluid) containing the lubricant in each of the inner recessed portions 30 is increased during the sliding of the sliding surface 10 of the seal ring 1 on the upper surface 105b of the thrust plate 105, which maintains or reinforces a film of the fluid between the upper surface 105b of the thrust plate 105 and the sliding surface 10 of the seal ring 1. Specifically, each of the inner recessed portions 30 opens in the back-pressure chamber 112 at the opening portion 32, so that the fluid in the back-pressure chamber 112 enters the inner recessed portion 30 through the opening portion 32. In each of the inner recessed portions 30, when the fluid flows toward the outer peripheral edge 31b side of each of the inner recessed portions 30 and toward the side surface 33 side or the side surface 34 side of the inner-rib planar portion 12 opposite to a direction of rotation of the thrust plate 105, due to the relative motion of the bottom surface 31 relative to the upper surface 105b of the thrust plate 105 and the pressure inside the back-pressure chamber 112, the fluid collides with the outer peripheral edge 31b and the side surface 33 or the side surface 34 of the inner-rib planar portion 12, which causes a pressure of a part of the fluid near the outer peripheral edge 31b and the side surface 33 or the side surface 34 of the inner-rib planar portion 12 to increase. Such a hydrodynamic action is caused in each of the inner recessed portions 30. An effect of the hydrodynamic action is that the high pressure produced in each of the inner recessed portions 30 pressurizes the film of the fluid formed in the gaps between the annular planar portion 11, the inner-rib planar portions 12, and the outer-rib planar portions 13 of the sliding surface 10 and the upper surface 105b of the thrust plate 105, which facilitates the maintenance of a thickness of the film of the fluid formed in the gaps between the annular planar portion 11, the inner-rib planar portions 12, and the outer-rib planar portions 13 of the sliding surface 10 and the upper surface 105b of the thrust plate 105. Moreover, a further increase in this pressure leads to an increase in height of the gaps between the annular planar portion 11, the inner-rib planar portions 12, and the outer-rib planar portions 13 of the sliding surface 10 and the upper surface 105b of the thrust plate 105, so that the fluid enters the increased gaps to increase the thickness of the film of the fluid in the gaps between the annular planar portion 11, the inner-rib planar portions 12, and the outer-rib planar portions 13 of the sliding surface 10 and the upper surface 105b of the thrust plate 105.

Specifically, in each of the inner recessed portions 30, the fluid flows toward the outer peripheral edge 31b side. As the fluid flows toward the outer peripheral edge 31b side, the fluid is pressed toward the outer peripheral edge 31b from the inner peripheral edge 31a. In the seal ring 1, the bottom surface 31 of each of the inner recessed portions 30 is in the form of or substantially in the form of a flat surface inclined toward the upper surface 105b side of the thrust plate 105 as approaching the outer peripheral side from the inner peripheral side while continuously increased in diameter as approaching the upper side, and an area of a cross section of each of the inner recessed portions 30, which is substantially parallel with a plane perpendicular to the radial direction, is decreased as approaching the outer peripheral side from the inner peripheral side as described above. This causes the fluid pressed toward the outer peripheral edge 31b in each of the inner recessed portions 30 to be increased in pressure as approaching the outer peripheral portion 31b side from the opening portion 32 side, so that the pressure of the portion of the fluid near the outer peripheral edge 31b becomes high. Thus, the fluid with the high pressure produced in each of the inner recessed portions 30 as described above pressurizes mainly the film of the fluid formed in the gap between the annular planar portion 11 of the sliding surface 10 and the upper surface 105b of the thrust plate 105, increasing the pressure of the film of the fluid formed in the gap between the annular planar portion 11 of the sliding surface 10 and the upper surface 105b of the thrust plate 105. Moreover, when the pressure of the film of the fluid formed in the gap between the annular planar portion 11 of the sliding surface 10 and the upper surface 105b of the thrust plate 105 increases, the height of the gap between the annular planar portion 11 of the sliding surface 10 and the upper surface 105b of the thrust plate 105 increases and the fluid flows into the increased gap, causing the fluid in the gap between the annular planar portion 11 of the sliding surface 10 and the upper surface 105b of the thrust plate 105 to increase and causing the thickness of the film of the fluid to increase.

Moreover, in the seal ring 1, the side surface 33 or the side surface 34 of the inner-rib planar portion 12 rises in a direction along the axis-x direction from the bottom surface 31 of each of the inner recessed portions 30 and also a direction away from the bottom surface 31. Moreover, the side surface 33 or the side surface 34 is in the form of or substantially in the form of a flat surface. In particular, as the fluid flows toward the side surface 33 side or the side surface 34 side of the inner-rib planar portion 12 opposite to the direction of rotation of the thrust plate 105 in each of the inner recessed portions 30, the fluid collides with the side surface 33 or the side surface 34 of the inner-rib planar portion 12, which causes a pressure of a part of the fluid near the side surface 33 or the side surface 34 of the inner-rib planar portion 12 to increase. The fluid with the high pressure produced in each of the inner recessed portions 30 pressurizes mainly the film of the fluid formed in the gap between the inner-rib planar portion 12 of the sliding surface 10 and the upper surface 105b of the thrust plate 105, increasing the pressure of the film of the fluid formed in the gap between the inner-rib planar portion 12 of the sliding surface 10 and the upper surface 105b of the thrust plate 105. Moreover, when the pressure of the film of the fluid formed in the gap between the inner-rib planar portion 12 of the sliding surface 10 and the upper surface 105b of the thrust plate 105 increases, the height of the gap between the inner-rib planar portion 12 of the sliding surface 10 and the upper surface 105b of the thrust plate 105 increases and the fluid flows into the increased gap causing the fluid in the gap between the inner-rib planar portion 12 of the sliding surface 10 and the upper surface 105b of the thrust plate 105 to increase and causing the thickness of the film of the fluid to increase.

Likewise, the seal ring 1 has the plurality of outer recessed portions 40 in the sliding surface 10 and thus the plurality of gaps 1c are formed between the upper surface 105b of the thrust plate 105 and the sliding surface 10. Moreover, the pressure of the coolant (the fluid) containing the lubricant in each of the outer recessed portions 40 is increased during the sliding of the sliding surface 10 of the seal ring 1 on the upper surface 105b of the thrust plate 105, which maintains or reinforces a film of the fluid between the upper surface 105b of the thrust plate 105 and the sliding surface 10 of the seal ring 1. Specifically, each of the outer recessed portions 40 opens in the low-pressure chamber 110 at the opening portion 42, so that the fluid in the low-pressure chamber 110 enters the outer recessed portion 40 through the opening portion 42. In each of the outer recessed portions 40, when the fluid flows toward the inner peripheral edge 41b side of each of the outer recessed portions 40 and toward the side surface 43 side or the side surface 44 side of the outer-rib planar portion 13 opposite to the direction of rotation of the thrust plate 105, due to the relative motion of the bottom surface 41 relative to the upper surface 105b of the thrust plate 105 and the pressure inside the low-pressure chamber 110, the fluid then collides with the inner peripheral edge 41b and the side surface 43 or the side surface 44 of the outer-rib planar portion 13, which causes a pressure of a part of the fluid near the inner peripheral edge 41b and the side surface 43 or the side surface 44 of the outer-rib planar portion 13 to increase. Such a hydrodynamic action is caused in each of the inner recessed portions 40. An effect of the hydrodynamic action is that the high pressure produced in each of the outer recessed portions 40 pressurizes the film of the fluid formed in the gaps between the annular planar portion 11, the inner-rib planar portions 12, and the outer-rib planar portions 13 of the sliding surface 10 and the upper surface 105b of the thrust plate 105, which facilitates the maintenance of a thickness of the film of the fluid formed in the gaps between the annular planar portion 11, the inner-rib planar portions 12, and the outer-rib planar portions 13 of the sliding surface 10 and the upper surface 105b of the thrust plate 105. Moreover, a further increase in this pressure leads to an increase in height of the gaps between the annular planar portion 11, the inner-rib planar portions 12, and the outer-rib planar portions 13 of the sliding surface 10 and the upper surface 105b of the thrust plate 105, so that the fluid enters the increased gaps to increase the thickness of the film of the fluid formed in the gaps between the annular planar portion 11, the inner-rib planar portions 12, and the outer-rib planar portions 13 of the sliding surface 10 and the upper surface 105b of the thrust plate 105.

Specifically, in each of the inner recessed portions 40, the fluid flows toward the inner peripheral edge 41b side. As the fluid flows toward the inner peripheral edge 41b side, the fluid is pressed toward the inner peripheral edge 41b from the outer peripheral edge 41a. In the seal ring 1, the bottom surface 41 of each of the outer recessed portions 40 is in the form of or substantially in the form of a flat surface inclined toward the upper surface 105b side of the thrust plate 105 as approaching the inner peripheral side from the outer peripheral side while continuously decreased in diameter as approaching the upper side, and an area of a cross section of each of the outer recessed portions 40, which is substantially parallel with a plane perpendicular to the radial direction, is decreased as approaching the inner peripheral side from the outer peripheral side as described above. This causes the fluid pressed toward the inner peripheral edge 41b in each of the outer recessed portions 40 to be increased in pressure as approaching the inner peripheral portion 41b side from the opening portion 42 side, so that the pressure of the portion of the fluid near the inner peripheral edge 41b becomes high. Thus, the fluid with the high pressure produced in each of the outer recessed portions 40 as described above pressurizes mainly the film of the fluid formed in the gap between the annular planar portion 11 of the sliding surface 10 and the upper surface 105b of the thrust plate 105, increasing the pressure of the film of the fluid formed in the gap between the annular planar portion 11 of the sliding surface 10 and the upper surface 105b of the thrust plate 105. Moreover, when the pressure of the film of the fluid formed in the gap between the annular planar portion 11 of the sliding surface 10 and the upper surface 105b of the thrust plate 105 increases, the height of the gap between the annular planar portion 11 of the sliding surface 10 and the upper surface 105b of the thrust plate 105 increases and the fluid flows into the increased gap, causing the fluid in the gap between the annular planar portion 11 of the sliding surface 10 and the upper surface 105b of the thrust plate 105 to increase and causing the thickness of the film of the fluid to increase.

Moreover, in the seal ring 1, the side surface 43 or of the side surface 44 of the outer-rib planar portion 13 rises in a direction along the axis-x direction from the bottom surface 41 of each of the outer recessed portions 40a and also a direction away from the bottom surface 41. Moreover, the side surface 43 or the side surface 44 is in the form of or substantially in the form of a flat surface. In particular, as the fluid flows toward the side surface 43 side or the side surface 44 side of the outer-rib planar portion 13 opposite to the direction of rotation of the thrust plate 105 in each of the outer recessed portions 40, the fluid collides with the side surface 43 or the side surface 44 of the outer-rib planar portion 13, which causes a pressure of a part of the fluid near the side surface 43 or the side surface 44 of the outer-rib planar portion 13to increase. The fluid with the high pressure produced in each of the outer recessed portions 40 pressurizes mainly the film of the fluid formed in the gap between the outer-rib planar portion 13 of the sliding surface 10 and the upper surface 105b of the thrust plate 105, increasing the pressure of the film of the fluid formed in the gap between the outer-rib planar portion 13 of the sliding surface 10 and the upper surface 105b of the thrust plate 105. Moreover, when the pressure of the film of the fluid formed in the gap between the outer-rib planar portion 13 of the sliding surface 10 and the upper surface 105b of the thrust plate 105 increases, the height of the gap between the outer-rib planar portion 13 of the sliding surface 10 and the upper surface 105b of the thrust plate 105 increases and the fluid flows into the increased gap, causing the fluid in the gap between the outer-rib planar portion 13 of the sliding surface 10 and the upper surface 105b of the thrust plate 105 to increase and causing the thickness of the film of the fluid to increase.

As described above, the thickness of the film of the fluid between the sliding surface 10 of the seal ring 1 and the upper surface 105b of the thrust plate 105 is maintained or reinforced (the thickness of the film is thickened) by virtue of the effects of the hydrodynamic action produced in each of the inner recessed portions 30 and each of the outer recessed portions 40. This reduces a micro and partial direct contact between the sliding surface 10 and the upper surface 105b with no lubricant film in between. It is also possible to reduce a decrease in or improve lubricity between the sliding surface 10 and the upper surface 105b. This leads to a decrease in sliding resistance of the seal ring 1 and, consequently, a decrease in friction resistance to the movable scroll 125, so that it is possible to decrease the driving torque of the drive motor 106. It is also possible to reduce an increase in sliding resistance of the seal ring 1.

Moreover, in the seal ring 1, when, in each of the inner recessed portions 30, the fluid in the back-pressure chamber 112 enters the inner recessed portion 30 through the opening portion 32, and, in each of the outer recessed portions 40, the fluid in the low-pressure chamber 110 enters the outer recessed portion 40 through the opening portion 42, whereby the hydrodynamic action is generated in each of the inner recessed portions 30 and the outer recessed portions 40, the film of the fluid formed in the gaps between the annular planar portion 11, the inner-rib planar portions 12, and the outer-rib planar portions 13 of the sliding surface 10 and the upper surface 105b of the thrust plate 105 is thus pressurized from both sides, from each of the inner recessed portions 30 side and from each of the outer recessed portions 40 side, which further facilitates the maintenance of the thickness of the film of the fluid formed in the gaps between the annular planar portion 11, the inner-rib planar portions 12, and the outer-rib planar portions 13 of the sliding surface 10 and the upper surface 105b of the thrust plate 105. Moreover, the film of the fluid formed in the gaps between the annular planar portion 11, the inner-rib planar portions 12, and the outer-rib planar portions 13 of the sliding surface 10 and the upper surface 105b of the thrust plate 105 is pressurized from both sides, from each of the inner recessed portions 30 side and from each of the outer recessed portions 40 side, which further increases the gaps between the annular planar portion 11, the inner-rib planar portions 12, and the outer-rib planar portions 13 of the sliding surface 10 and the upper surface 105b of the thrust plate 105. As a result, a larger amount of the fluid flows into the further increased gaps, which makes it possible to further increase the thickness of the film of the fluid in the gaps between the annular planar portion 11, the inner-rib planar portions 12, and the outer-rib planar portions 13 of the sliding surface 10 and the upper surface 105b of the thrust plate 105. It is thus possible to further improve lubricity between the sliding surface 10 and the upper surface 105b, further decrease the sliding resistance of the seal ring 1, further decrease a friction resistance to the movable scroll 125, and further decrease the driving torque of the drive motor 106.

Moreover, in the seal ring 1, the inner recessed portions 30 and the respective outer recessed portions 40 face away with each other in the radial direction and arranged in the radial direction. It is thus possible to efficiently produce the hydrodynamic action and the effects of the hydrodynamic action in between the sliding surface 10 of the seal ring 1 and the upper surface 105b of the thrust plate 105 by virtue of the pairs of inner recessed portions 30 and outer recessed portions 40 arranged in the radial direction.

A thrust load to the thrust plate 105 is applied to the seal ring 1 and the sliding surface 10 of the seal ring 1 wears due to the sliding of the seal ring 1 relative to the thrust plate 105. In particular, in a case where the seal ring 1 is made of a resin material, there are cases where the sliding surface 10 of the seal ring 1 is likely to wear due to the sliding of the seal ring 1 relative to the thrust plate 105. In a case where the hydrodynamic action of the inner recessed portions 30 and the outer recessed portions 40 decreases or disappears due to the wear, the above-described lubrication performance of the seal ring 1 and effect to decrease the sliding resistance of the seal ring 1 fail to be produced.

In the seal ring 1, the bottom surface 31 of each of the inner recessed portions 30 is in the form of or substantially in the form of a flat surface inclined downward from the annular planar portion 11 toward the inner peripheral side while continuously increased in diameter as approaching the upper side from the lower side in the axis-x direction as illustrated in Figs. 3 and 4. Likewise, the bottom surface 41 of each of the outer recessed portions 40 is in the form of or substantially in the form of a flat surface inclined downward from the annular planar portion 11 toward the outer peripheral side while continuously decreased in diameter as approaching the upper side from the lower side in the axis-x direction as illustrated in Figs. 3 and 4. Thus, even though the sliding surface 10 (the annular planar portion 11, the inner-rib planar portions 12, and the outer-rib planar portions 13) of the seal ring 1 wears, the bottom surface 31, which is inclined downward toward the inner peripheral side, and the bottom surface 41, which is inclined downward toward the outer peripheral side, are allowed to remain with respect to the worn annular planar portion 11. More specifically, even though the sliding surface 10 of the seal ring 1 wears, a structure formed by the unworn annular planar portion 11 and the bottom surface 31 is maintainable between the annular planar portion 11 and the bottom surface 31 and a structure formed by the unworn annular planar portion 11 and the bottom surface 41 is maintainable between the annular planar portion 11 and the bottom surface 41. This makes it possible to maintain the above-described hydrodynamic action of each of the inner recessed portions 30 and each of the outer recessed portions 40 and the effects of the hydrodynamic action even though the wear of the sliding surface 10 of the seal ring 1 progresses. Therefore, even in a case where the wear of the sliding surface 10 of the seal ring 1 progresses, the seal ring 1 is capable of maintaining a high lubricity between the sliding surface 10 and the upper surface 105a, maintaining a low sliding resistance of the seal ring 1, maintaining the friction resistance of the seal ring 1 to the movable scroll 125 at a low level, and maintaining a low driving torque of the drive motor 106 on the basis of the hydrodynamic action of each of the inner recessed portions 30 and each of the outer recessed portions 40.

As seen from the above, the seal ring 1 according to the first embodiment of the present invention enables a reduction in an increase over time in sliding resistance of the seal ring 1 to the thrust plate 105.

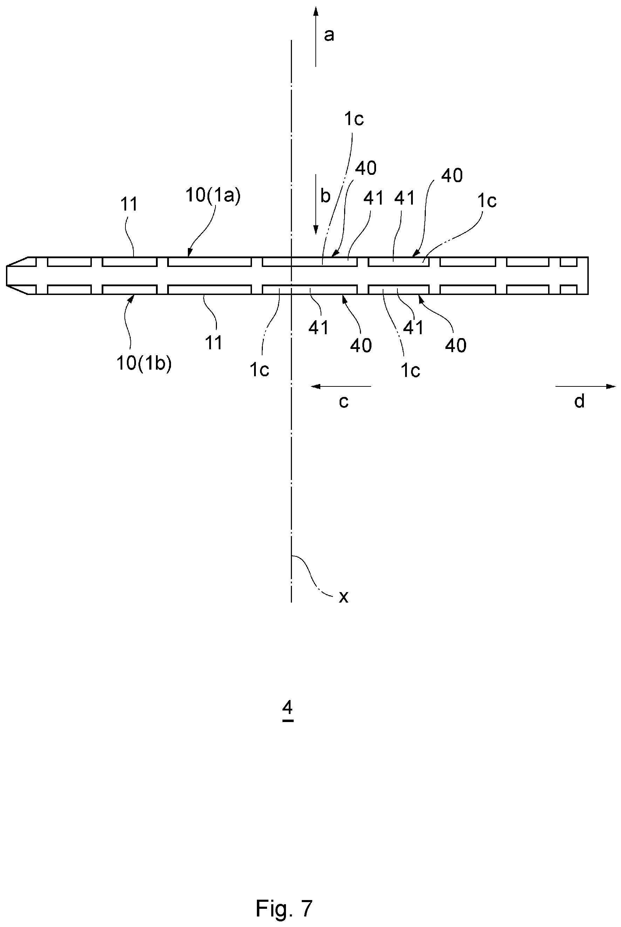

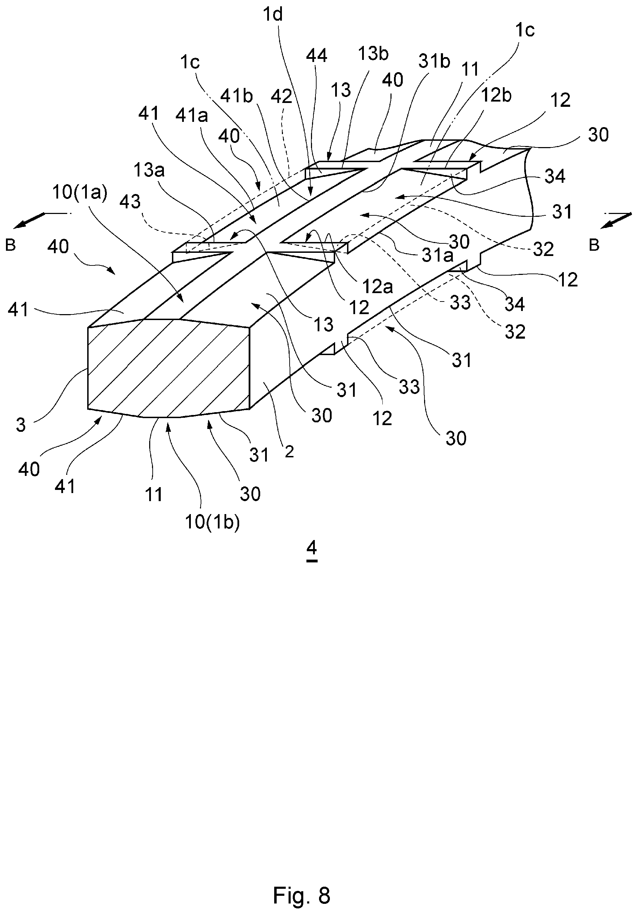

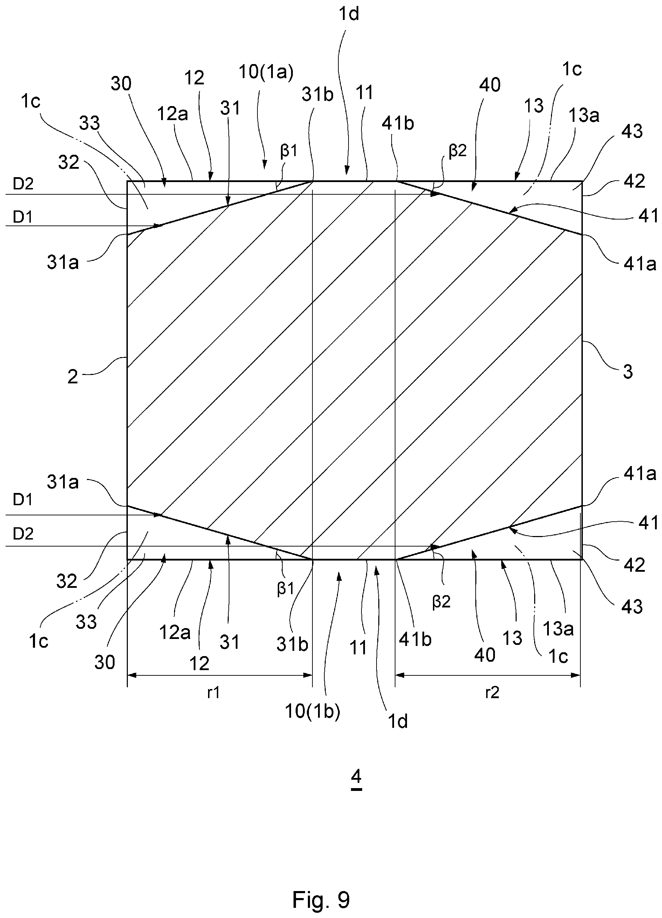

Next, description will be made on a seal ring 4 according to a second embodiment of the present invention. Fig. 7 is a side view of the seal ring 4 according to the second embodiment of the present invention, Fig. 8 is a cross-sectional perspective view illustrating a portion of the seal ring 4, and Fig. 9 is a cross sectional view of the seal ring 4 in a cross section along a line B-B in Fig. 8. Fig. 9 is a cross sectional view in a cross section corresponding to the cross section of the seal ring 1 illustrated in Fig. 4 described above.

As illustrated in Figs. 7 to 9, the seal ring 4 according to the second embodiment of the present invention is different from the above-described seal ring 1 in that the seal ring 4 has, as the opposite-side surface 1b, the sliding surface 10 in place of the fixed surface 20. In other words, the seal ring 4 has a pair of sliding surfaces 10 facing away from each other in the axis-x direction. The sliding surface 10 on the upper side and the sliding surface 10 on the lower side are symmetric with respect to the axis-x direction. It should be noted that the sliding surface 10 on the upper side and the sliding surface 10 on the lower side are not necessarily symmetric with respect to the axis-x direction. For example, each of the inner recessed portions 30 on the upper side and each of the inner recessed portions 30 on the lower side may be different in shape and/or size from each other and do not have to be located at corresponding positions in the axis-x direction. Likewise, each of the outer recessed portions 40 on the upper side and each of the outer recessed portions 40 on the lower side may be different in shape and/or size from each other and do not have to be located at corresponding positions in the axis-x direction.

According to the seal ring 4, as both of the two surfaces facing away from each other in the axis-x direction constitute the sliding surfaces 10, it can eliminate the necessity of checking the orientation of the seal ring 4 in attaching the seal ring 4 to the scroll compressor 100, thereby allowing for easy attachment of the seal ring 4. Moreover, the seal ring 4 is able to function similarly to the above-described seal ring 1 in use to produce a hydrodynamic action and the effects of the hydrodynamic action similar to those of the seal ring 1, so that the hydrodynamic action is maintainable even though the wear of the sliding surface 10 progresses.

As seen from the above, the seal ring 4 according to the second embodiment of the present invention enables a reduction in an increase over time in sliding resistance of the seal ring 1 to the thrust plate 105.

Next, description will be made on a seal ring 5 according to a third embodiment of the present invention. The seal ring 5 according to the third embodiment of the present invention is different from the above-described seal ring 1 mainly in the form of the bottom surface of each of the inner recessed portions and the form of the bottom surface of each of the outer recessed portions. Hereinafter, a component of the seal ring 5 that is the same as or similar in function to the component of the seal ring 1 is labelled with the same reference sign and the description thereof is omitted, accordingly, and description will be made only on a component different from that of the seal ring 1.

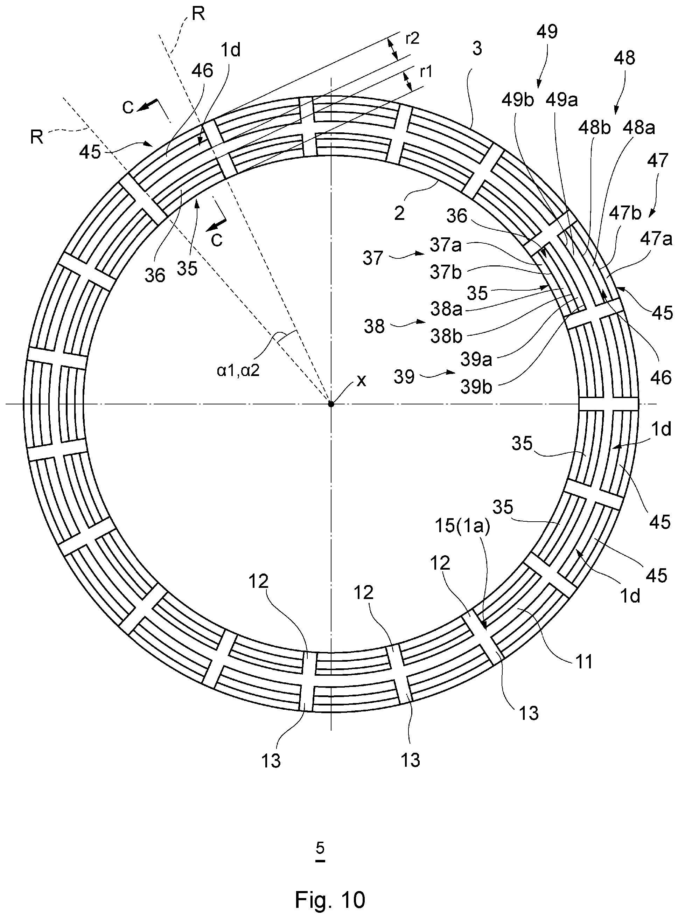

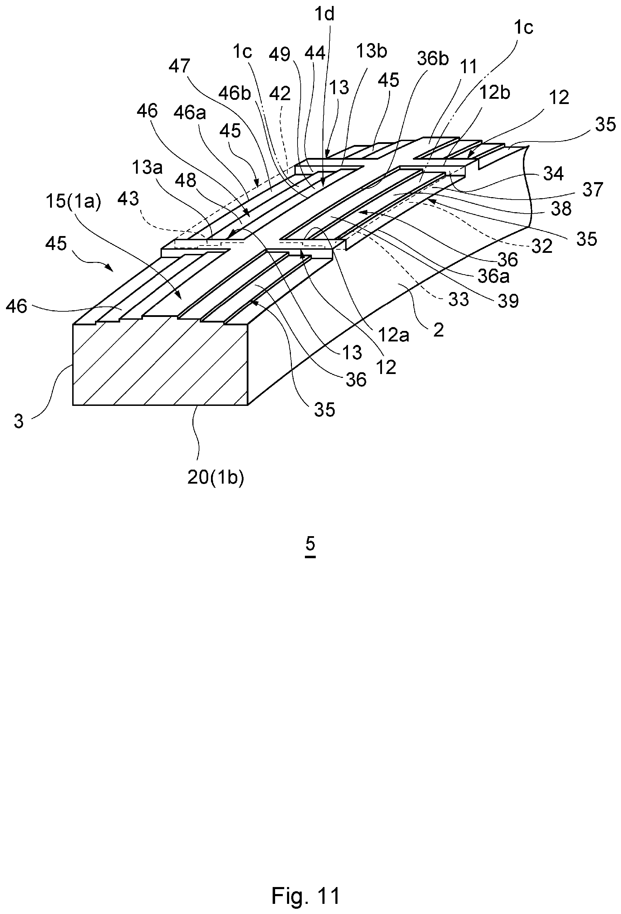

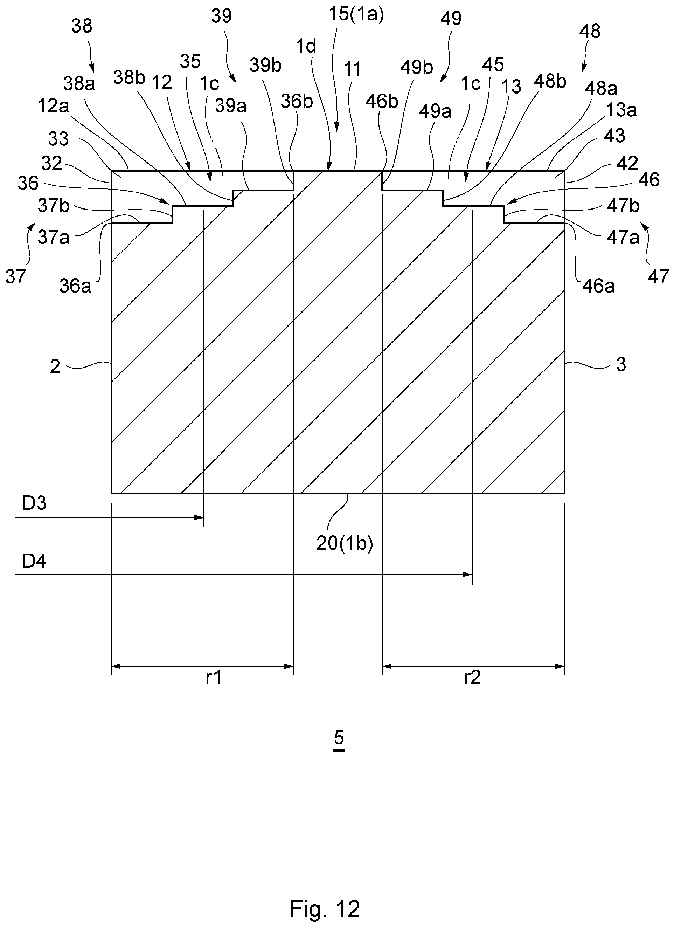

Fig. 10 is a plan view of the seal ring 5 according to the third embodiment of the present invention, Fig. 11 is a cross-sectional perspective view illustrating a portion of the seal ring 5, and Fig. 12 is a cross sectional view of the seal ring 5 in a cross section along a line C-C in Fig. 10. As illustrated in Figs. 10 to 12, the seal ring 5 has a sliding surface 15 different from the sliding surface 10 of the seal ring 1. The sliding surface 15 of the seal ring 5 is formed with a plurality of inner recessed portions 35 and a plurality of outer recessed portions 45 provided similarly to the plurality of inner recessed portions 30 and the plurality of outer recessed portions 40 of the sliding surface 10 of the seal ring 1, respectively. The sliding surface 15 thus has the annular planar portion 11, the inner-rib planar portions 12, and the outer-rib planar portions 13 as the sliding surface 10.

The inner recessed portions 35 of the seal ring 5 have a bottom surface 36 different in form from the bottom surface 31 of the inner recessed portions 30 of the seal ring 1. Moreover, the outer recessed portions 45 of the seal ring 5 have a bottom surface 46 different in form from the bottom surface 41 of the outer recessed portions 40 of the seal ring 1.

The bottom surface 36 of each of the inner recessed portions 35 is increased in diameter as approaching the upper side from the lower side in the axis-x direction and increased in distance from the axis x (diameter D3) as approaching the upper side in the axis-x direction as illustrated in Figs. 10 to 12. As illustrated in Figs. 11 and 12, the bottom surface 36 of each of the inner recessed portions 35 is, for example, intermittently increased in diameter as approaching the upper side in the axis-x direction. Specifically, for example, the bottom surface 36 is in the form of a stepped surface having a step 37, a step 38, and a step 39 as illustrated in Figs. 10 to 12. An inclination angle made by the bottom surface 36 is, for example, the same as the above-described inclination angle β1 of the bottom surface 31 of the inner recessed portions 30. The inclination angle made by the bottom surface 36 may be different from the inclination angle β1 of the bottom surface 31. The step 37 has a planar portion 37a and a stepped portion 37b. As illustrated in Figs. 10 and 11, the planar portion 37a is a surface extending in an arc across a range with a central angle α1 (a range between dotted lines R) centered about the axis x and is, for example, a surface in the shape of a circular arc extending along a circular arc extending across the range with the central angle α1 and also a surface extending in parallel with or substantially in parallel with a plane perpendicular to the axis x. Moreover, the stepped portion 37b is a surface that is, in cross section, in the shape of an arc extending upward from an edge on the outer peripheral side of the planar portion 37a and is, for example, a surface that is, in cross section, in the shape of a circular arc extending along a circular arc extending across the range with the central angle α1 and also a surface extending in parallel with or substantially in parallel with a cylindrical or substantially cylindrical plane centered about or substantially about the axis x. The planar portion 37a and the stepped portion 37b may be smoothly connected or may be perpendicular to each other or the like without being smoothly connected.

Similarly to the step 37, the step 38 has a planar portion 38a and a stepped portion 38b. The planar portion 38a extends from an edge on the upper side of the stepped portion 37b toward the outer peripheral side and is, for example, a surface similar or substantially similar to the planar portion 37a. The stepped portion 38b extends upward from an edge on the outer peripheral side of the planar portion 38a and is, for example, a surface similar or substantially similar to the stepped portion 37b. The planar portion 38a and the stepped portion 37b may be smoothly connected or may be perpendicular to each other or the like without being smoothly connected. The planar portion 38a and the stepped portion 38b may be smoothly connected or may be perpendicular to each other or the like without being smoothly connected. Similarly to the step 38, the step 39 has a planar portion 39a and a stepped portion 39b. The planar portion 39a extends from an edge on the upper side of the stepped portion 38b toward the outer peripheral side and is, for example, a surface similar or substantially similar to the planar portion 38a. The stepped portion 39b extends upward from an edge on the outer peripheral side of the planar portion 39a and is, for example, a surface similar or substantially similar to the stepped portion 38b. The stepped portion 39b is connected with the annular planar portion 11 of the sliding surface 10. The stepped portion 39a and the stepped portion 38b may be smoothly connected or may be perpendicular to each other or the like without being smoothly connected. The planar portion 39a and the stepped portion 39b may be smoothly connected or may be perpendicular to each other or the like without being smoothly connected. The stepped portion 39b and the annular planar portion 11 may be smoothly connected or may be perpendicular to each other or the like without being smoothly connected.

As illustrated in Figs. 11 and 12, the planar portion 37a of the step 37 of the bottom surface 36 of each of the inner recessed portions 35 is connected with the inner peripheral surface 2 at an edge on the inner peripheral side (an inner peripheral edge 36a) and the inner peripheral edge 36a of the bottom surface 36 of each of the inner recessed portions 35 is located below the inner-rib planar portions 12 of the sliding surface 10 in the axis-x direction. As seen from the above, the inner recessed portions 35 each form an opening portion 32 in the inner peripheral surface 2 as the above-described inner recessed portions 30.

It should be noted that the respective planar portions 37a, 38a, 39a of the steps 37, 38, 39 are not limited to a surface parallel with a plane perpendicular to the axis x. The planar portions 37a, 38a, 39a may be, for example, a flat or substantially flat surface inclined upward from the inner peripheral side toward the outer peripheral side with respect to a plane perpendicular to the axis x, may be a non-flat surface, or may be a surface in any other shape. Moreover, the respective stepped portions 37b, 38b, 39b of the steps 37, 38, 39 are not limited to a surface parallel with a circular cylindrical plane. The stepped portions 37b, 38b, 39b may be, for example, a surface parallel or substantially parallel with a coned plane increased in diameter toward the upper side or may be a surface in any other shape. Moreover, although the bottom surface 36 has the three steps (the steps 37, 38, 39) and the number of the steps of the bottom surface 36 is not limited to three and may be one or two or four or more.

The bottom surface 46 of each of the outer recessed portions 45 is decreased in diameter as approaching the upper side from the lower side in the axis-x direction and increased in distance from the axis x (diameter D4) as approaching the upper side in the axis-x direction as illustrated in Figs. 10 to 12. As illustrated in Figs. 11 and 12, the bottom surface 46 of each of the outer recessed portions 45 is, for example, intermittently decreased in diameter as approaching the upper side in the axis-x direction. Specifically, for example, the bottom surface 46 is in the form of a stepped surface having a step 47, a step 48, and a step 49 as illustrated in Figs. 10 to 12. An inclination angle made by the bottom surface 46 is, for example, the same as the above-described inclination angle β2 of the bottom surface 41 of the outer recessed portions 40. The inclination angle made by the bottom surface 46 may be different from the inclination angle β2 of the bottom surface 41. The step 47 has a planar portion 47a and a stepped portion 47b. As illustrated in Figs. 10 and 11, the planar portion 47a is a surface extending in an arc across a range with a central angle α2 (a range between dotted lines R) centered about the axis x and is, for example, a surface in the shape of a circular arc extending along a circular arc extending across the range with the central angle α2 and also a surface extending in parallel with or substantially in parallel with a plane perpendicular to the axis x. Moreover, the stepped portion 47b is a surface that is, in cross section, in the shape of an arc extending upward from an edge on the outer peripheral side of the planar portion 47a and is, for example, a surface that is, in cross section, in the shape of a circular arc extending along a circular arc extending across the range with the central angle α2 and also a surface extending in parallel with or substantially in parallel with a cylindrical or substantially cylindrical plane centered about or substantially about the axis x. The planar portion 47a and the stepped portion 47b may be smoothly connected or may be perpendicular to each other or the like without being smoothly connected.

Similarly to the step 47, the step 48 has a planar portion 48a and a stepped portion 48b. The planar portion 48a extends from an edge on the upper side of the stepped portion 47b toward the inner peripheral side and is, for example, a surface similar or substantially similar to the planar portion 47a. The stepped portion 48b extends from an edge on the inner peripheral side of the planar portion 48a toward the upper side and is, for example, a surface similar or substantially similar to the stepped portion 47b. The planar portion 48a and the stepped portion 47b may be smoothly connected or may be perpendicular to each other or the like without being smoothly connected. The planar portion 48a and the stepped portion 48b may be smoothly connected or may be perpendicular to each other or the like without being smoothly connected. Similarly to the step 48, the step 49 has a planar portion 49a and a stepped portion 49b. The planar portion 49a extends from an edge on the upper side of the stepped portion 48b toward the inner peripheral side and is, for example, a surface similar or substantially similar to the planar portion 48a. The stepped portion 49b extends from an edge on the inner peripheral side of the planar portion 49a toward the upper side and is, for example, a surface similar or substantially similar to the stepped portion 48b. The stepped portion 49b is connected with the annular planar portion 11 of the sliding surface 10. The planar portion 49a and the stepped portion 48b may be smoothly connected or may be perpendicular to each other or the like without being smoothly connected. The planar portion 49a and the stepped portion 49b may be smoothly connected or may be perpendicular to each other or the like without being smoothly connected. The stepped portion 49b and the annular planar portion 11 may be smoothly connected or may be perpendicular to each other or the like without being smoothly connected.

As illustrated in Figs. 11 and 12, the planar portion 47a of the step 47 of the bottom surface 46 of each of the outer recessed portions 45 is connected with the outer peripheral surface 3 at an edge on the outer peripheral side (an outer peripheral edge 46a) and the outer peripheral edge 46a of the bottom surface 46 of each of the outer recessed portions 45 is located below the inner-rib planar portions 12 of the sliding surface 10 in the axis-x direction. As seen from the above, the outer recessed portions 45 each form an opening portion 42 in the outer peripheral surface 3 as the above-described outer recessed portions 40.

It should be noted that the respective planar portions 47a, 48a, 49a of the steps 47, 48, 49 are not limited to a surface parallel with a plane perpendicular to the axis x. The planar portions 47a, 48a, 49a may be, for example, a flat or substantially flat surface inclined upward from the inner peripheral side toward the outer peripheral side with respect to a plane perpendicular to the axis x, may be a non-flat surface, or may be a surface in any other shape. Moreover, the respective stepped portions 47b, 48b, 49b of the steps 47, 48, 49 are not limited to a surface parallel with a circular cylindrical plane. The stepped portions 47b, 48b, 49b may be, for example, a surface parallel or substantially parallel with a coned plane increased in diameter toward the upper side or may be a surface in any other shape. Moreover, although the bottom surface 46 has the three steps (the steps 47, 48, 49), the number of the steps of the bottom surface 46 is not limited to three and may be one or two or four or more.

As seen from the above, each of the inner recessed portions 30 forms a recessed portion on the inner peripheral side of the sliding surface 15 and the recessed portion gradually decreases in area in a cross section perpendicular to the radial direction or area in a cross section defined by a cylindrical plane centered about the axis x from the opening portion 32 on the inner peripheral side toward the outer peripheral edge 36b on the outer peripheral side. In contrast, each of the outer recessed portions 45 forms a recessed portion on the outer peripheral side of the sliding surface 15 and the recessed portion gradually decreases in area in a cross section perpendicular to the radial direction or area in a cross section defined by a cylindrical plane centered about the axis x from the opening portion 42 on the outer peripheral side toward the inner peripheral edge 46b on the inner side. It should be noted that the outer peripheral edge 36b of each of the inner recessed portions 35 is an edge on the outer peripheral side of the bottom surface 36 and also an edge on the upper side of the stepped portion 39b of the step 39. Moreover, the inner peripheral edge 46b of each of the outer recessed portions 45 is an edge on the inner peripheral side of the bottom surface 46 and also an edge on the upper side of the stepped portion 49b of the step 49.

As described above, the seal ring 5 has the inner recessed portions 35 having the bottom surface 36 increased in diameter as approaching the upper side in the axis-x direction and the outer recessed portions 45 having the bottom surface 46 decreased in diameter as approaching the upper side in the axis-x direction as the inner recessed portions 30 and the outer recessed portions 40 of the above-described seal ring 1, respectively. This enables the seal ring 5 to produce, in the scroll compressor 100, the hydrodynamic action and the effects of the hydrodynamic action as the seal ring 1 to maintain a high lubricity between the sliding surface 15 of the seal ring 5 and the upper surface 105b of the thrust plate 105, maintain a low sliding resistance of the seal ring 5, maintain a friction resistance to the movable scroll 125 at a low level, and maintain a low driving torque of the drive motor 106 as the seal ring 1.

Moreover, the bottom surface 36 of each of the inner recessed portions 35 of the seal ring 5 is a stepped surface declined downward from the annular planar portion 11 toward the inner peripheral side while intermittently increased in diameter as approaching the upper side in the axis-x direction as illustrated in Figs. 11 and 12. Likewise, the bottom surface 46 of each of the outer recessed portions 45 is a stepped surface declined downward from the annular planar portion 11 toward the outer peripheral side while intermittently decreased in diameter as approaching the upper side in the axis-x direction as illustrated in Figs. 11 and 12. Thus, even though the sliding surface 15 (the annular planar portion 11, the inner-rib planar portions 12, and the outer-rib planar portions 13) of the seal ring 5 wears, the bottom surface 36, which is declined downward toward the inner peripheral side, and the bottom surface 46, which is declined downward toward the outer peripheral side, are allowed to remain with respect to the worn annular planar portion 11. More specifically, even though the sliding surface 15 of the seal ring 5 wears, a structure formed by the unworn annular planar portion 11 and the bottom surface 36 is maintainable between the annular planar portion 11 and the bottom surface 36 and a structure formed by the unworn annular planar portion 11 and the bottom surface 46 is maintainable between the annular planar portion 11 and the bottom surface 46. This makes it possible to maintain the above-described hydrodynamic action of each of the inner recessed portions 35 and each of the outer recessed portions 45 and the effects of the hydrodynamic action even though the wear of the sliding surface 15 of the seal ring 5 progresses as the seal ring 1. Therefore, even in a case where the wear of the sliding surface 15 of the seal ring 5 progresses, the seal ring 5 is capable of maintaining a high lubricity between the sliding surface 15 of the seal ring 5 and the upper surface 105b of the thrust plate 105, maintaining a low sliding resistance of the seal ring 5, maintaining a friction resistance to the movable scroll 125 at a low level, and maintaining a low driving torque of the drive motor 106 on the basis of the hydrodynamic action of each of the inner recessed portions 35 and each of the outer recessed portions 45.

As seen from the above, the seal ring 5 according to the third embodiment of the present invention enables a reduction in an increase over time in sliding resistance of the seal ring 5 to the thrust plate 105.

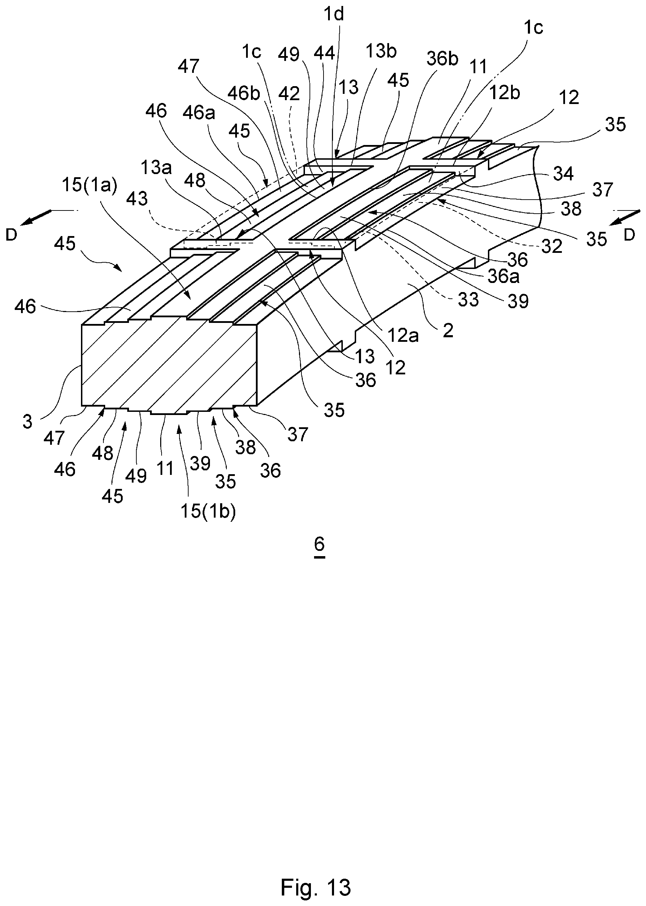

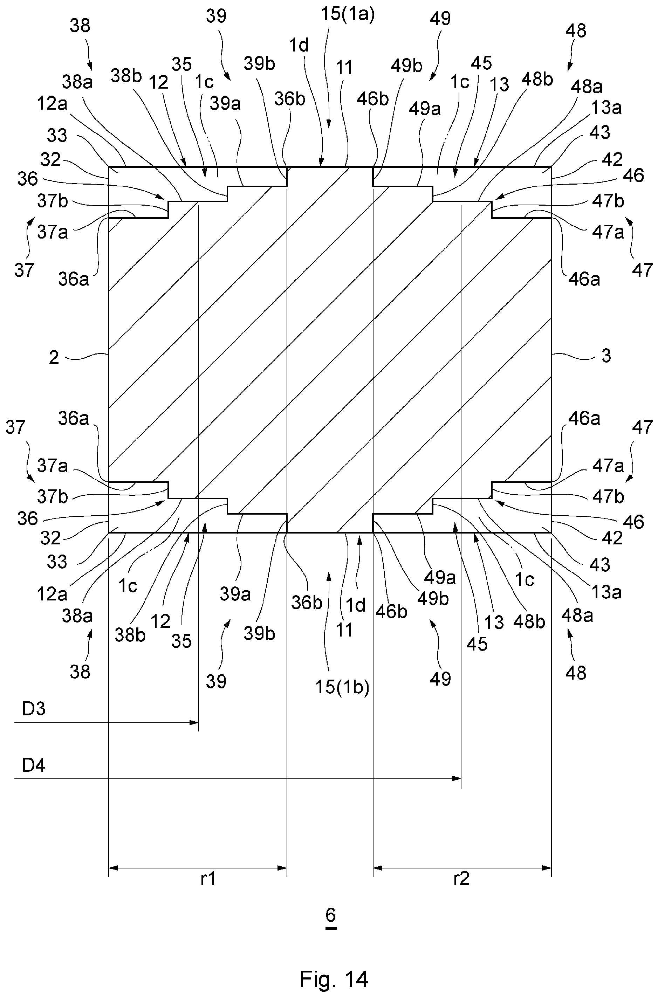

Next, description will be made on a seal ring 6 according to a fourth embodiment of the present invention. Fig. 13 is a cross-sectional perspective view illustrating a portion of the seal ring 6 according to the fourth embodiment of the present invention and Fig. 14 is a cross sectional view of the seal ring 6 in a cross section along a line D-D in Fig. 13.

The seal ring 6 according to the fourth embodiment of the present invention is different from the above-described seal ring 5 in that the seal ring 6 has the sliding surface 15 in place of the fixed surface 20 serving as the opposite-side surface 1b as illustrated in Figs. 13 and 14. In other words, the seal ring 6 has a pair of sliding surfaces 15 facing away from each other in the axis-x direction. The sliding surface 15 on the upper side and the sliding surface 15 on the lower side are symmetric with respect to the axis-x direction. It should be noted that the sliding surface 15 on the upper side and the sliding surface 15 on the lower side are not necessarily symmetric with respect to the axis-x direction. For example, each of the inner recessed portions 35 on the upper side and each of the inner recessed portions 35 on the lower side may be different in shape and/or size from each other and do not have to be located at corresponding positions in the axis-x direction. Likewise, each of the outer recessed portions 45 on the upper side and each of the outer recessed portions 45 on the lower side may be different in shape and/or size from each other and do not have to be located at corresponding positions in the axis-x direction.

According to the seal ring 6, the two surfaces facing away from each other in the axis-x direction constitute the sliding surfaces 15, it can eliminate the necessity of checking the orientation of the seal ring 6 in attaching the seal ring 6 to the scroll compressor 100, thereby allowing for easy attachment of the seal ring 6. Moreover, the seal ring 6 is able to function similarly to the above-described seal ring 5 in use to produce a hydrodynamic action and the effects of the hydrodynamic action similar to those of the seal ring 5, so that the hydrodynamic action is maintainable even though the wear of the sliding surface 15 progresses.

As seen from the above, the seal ring 6 according to the fourth embodiment of the present invention enables a reduction in an increase over time in sliding resistance of the seal ring 6 to the thrust plate 105.

The embodiments of the present invention are described hereinabove. However, the present invention is not limited to the seal rings 1, 4, 5, 6 according to the above-described embodiments of the present invention and includes any form within the scope of the conception and claims of the present invention. Moreover, in order to at achieve at least a part of the above-described problems and effects, the individual components may be selectively combined, if necessary. For example, the shapes, materials, locations, sizes, and the like of the individual components in the above-described embodiments may be changed in accordance with a specific mode of use of the present invention, if necessary.

### [Reference Signs List]

1, 4, 5, 6...seal ring, 1a...one-side surface, 1b...opposite-side surface, 1c...gap, 1d...projecting portion, 2...inner peripheral surface, 3...outer peripheral surface, 10, 15...sliding surface, 11...annular planar portion, 12...inner-rib planar portion, 12a, 12b...edge, 13...outer-rib planar portion, 13a, 13b...edge, 20...fixed surface, 30, 35...inner recessed portion, 31, 36...bottom surface, 31a, 36a...inner peripheral edge, 31b, 36b...outer peripheral edge, 32...opening portion, 33, 34...side surface, 37, 38, 39...step, 37a, 38a, 39a...planar portion, 37b, 38b, 39b...stepped portion, 40, 45... outer recessed portion, 41, 46... bottom surface, 41a, 46a...outer peripheral edge, 41b, 46b...inner peripheral edge, 42...opening portion, 43, 44...side surface 47, 48, 49...step, 47a, 48a, 49a...planar portion, 47b, 48b, 49b...stepped portion, 100...scroll compressor, 101... housing, 102...rotary shaft, 102a...eccentric portion, 102b...counter weight unit, 103...inner casing, 103a...through hole, 104...scroll compression mechanism, 104a...compression chamber, 105...thrust plate, 105a...lower surface, 105b...upper surface, 105c...through hole, 106...drive motor, 107...casing, 108...cover, 109...suction opening, 110... low-pressure chamber, 111...high-pressure chamber, 112...back-pressure chamber, 113... discharge communication path, 114...back-pressure communication path, 115...oil separator, 116...suction communication path, 117, 118...seal ring, 119a...depressurizing hole, 119b...pressure regulation valve, 120...fixed scroll, 121...endplate, 122...wrap, 123...recessed portion, 124... discharge hole, 125...movable scroll, 126...endplate, 126a...lower surface, 127...wrap, 128...boss, D1, D2, D3, D4...diameter, α1, α2...central angle, β1, β2...inclination angle, r1, r2...width, S...sliding region, x, x1, x2...axis

## Claims

1. A seal ring for closing a gap between two members configured to relatively move with respect to each other, the seal ring being in an annular shape around an axis, the seal ring comprising:
a one-side surface that is an annular surface facing one side in a direction of the axis; and
an opposite-side surface that is an annular surface facing an opposite side in the direction of the axis, wherein
when being in contact with one or another one of the two members, at least one of the one-side surface and the opposite-side surface is configured to form a gap between the one or the other one of the two members and the at least one of the one-side surface and the opposite-side surface, and
the gap is configured to gradually decrease with wear of the at least one of the one-side surface and the opposite-side surface due to the contact with the one of the two members.

2. The seal ring according to claim 1, wherein
the at least one of the one-side surface and the opposite-side surface includes a plurality of portions projecting toward the side faced by the at least one of the one-side surface and the opposite-side surface.

3. The seal ring according to claim 2, wherein
the plurality of projecting portions are provided at a distance around the axis.

4. The seal ring according to claim 1, wherein
when being in contact with the one of the two members, the one-side surface is configured to form the gap between the one of the two members and the one-side surface, and
when being in contact with the other one of the two members, the opposite-side surface is configured to form the gap between the other one of the two members and the opposite-side surface.

5. The seal ring according to claim 1, wherein
the one-side surface includes: a plurality of one-side inner peripheral recessed portions that are recessed portions formed with a space in between in a circumferential direction and opening on an inner peripheral side; and a plurality of one-side outer peripheral recessed portions that are recessed portions formed with a space in between in the circumferential direction and opening on an outer peripheral side,
the one-side inner peripheral recessed portions each have a bottom surface that is a surface increased in diameter as approaching the one side in the direction of the axis, and
the one-side outer peripheral recessed portions each have a bottom surface that is a surface decreased in diameter as approaching the one side in the direction of the axis.

6. The seal ring according to claim 5, wherein
the bottom surface of each of the one-side inner peripheral recessed portions is continuously increased in diameter as approaching the one side in the direction of the axis.

7. The seal ring according to claim 5 or 6, wherein
the bottom surface of each of the one-side outer peripheral recessed portions is continuously decreased in diameter as approaching the one side in the direction of the axis.

8. The seal ring according to claim 5, wherein
the bottom surface of each of the one-side inner peripheral recessed portions is intermittently increased in diameter as approaching the one side in the direction of the axis.

9. The seal ring according to claim 5 or 8, wherein
the bottom surface of each of the one-side outer peripheral recessed portions is intermittently decreased in diameter as approaching the one side in the direction of the axis.

10. The seal ring according to claim 5, wherein
the one-side inner peripheral recessed portions and the respective one-side outer peripheral recessed portions face away from each other in a radial direction.

11. The seal ring according to claim 5, wherein
the opposite-side surface includes: a plurality of opposite-side inner peripheral recessed portions that are recessed portions formed with a space in between in the circumferential direction and opening on the inner peripheral side; and a plurality of opposite-side outer peripheral recessed portions that are recessed portions formed with a space in between in the circumferential direction and opening on the outer peripheral side,
the opposite-side inner peripheral recessed portions each have a bottom surface that is a surface increased in diameter as approaching the opposite side in the direction of the axis, and
the opposite-side outer peripheral recessed portions each have a bottom surface that is a surface decreased in diameter as approaching the opposite side in the direction of the axis.

12. The seal ring according to claim 11, wherein
the bottom surface of each of the opposite-side inner peripheral recessed portions is continuously increased in diameter as approaching the opposite side in the direction of the axis.

13. The seal ring according to claim 11 or 12, wherein
the bottom surface of each of the opposite-side outer peripheral recessed portions is continuously decreased in diameter as approaching the opposite side in the direction of the axis.

14. The seal ring according to claim 11, wherein
the bottom surface of each of the opposite-side inner peripheral recessed portions is intermittently increased in diameter as approaching the opposite side in the direction of the axis.

15. The seal ring according to claim 11 or 14, wherein
the bottom surface of each of the opposite-side outer peripheral recessed portions is intermittently decreased in diameter as approaching the opposite side in the direction of the axis.

16. The seal ring according to claim 11, wherein
the opposite-side inner peripheral recessed portions and the respective opposite-side outer peripheral recessed portions face away from each other in a radial direction.
